# EUROPEAN PATENT APPLICATION

(11) **EP 4 541 167 A1**
(43) Date of publication of application: **23.04.2025**
(21) Application number: 24206695.9
(22) Date of filing: 15.10.2024
(51) Int. Cl.: A01B 69/04, A01B 69/00, G05D 1/00

(54) **CONTROL METHOD FOR WORK VEHICLE, CONTROL PROGRAM FOR WORK VEHICLE, CONTROL SYSTEM FOR WORK VEHICLE, AND WORK SYSTEM**

(30) Priority: 19.10.2023 JP 2023180089; 24.07.2024 JP 2024118447
(71) Applicant: Yanmar Holdings Co., Ltd., Osaka-shi, Osaka (JP)
(72) Inventor: TAKAHASHI, Mamoru, Osaka-shi (JP); MIYAKE, Koji, Okayama-shi (JP); NISHII, Yasuto, Okayama-shi (JP)
(74) Representative: Dennemeyer & Associates S.A.

(57) **Abstract**

[Problem] To provide a control method for a work vehicle, a control program for a work vehicle, a control system for a work vehicle, and a work system, which enable a work vehicle to travel on a more appropriate route.

[Solution] A control method for a work vehicle is a control method for a work vehicle capable of performing work while traveling on a working ground F1. This control method includes: setting a position of an allowable limit line La1 that is defined by a margin value L2 which is a distance to inside of the working ground F1, based on an outline of the working ground F1, and that is a limit position at which protrusion of the work vehicle is allowed; and generating a route (target route R1) for causing the work vehicle to travel (target route R1) on the basis of the allowable limit line La1.

## Description

### TECHNICAL FIELD

The present invention relates to a control method for a work vehicle capable of performing work while traveling on a working ground, a control program for the work vehicle, a control system for the work vehicle, and a work system.

### BACKGROUND ART

As a related technology, a technology that enables an operator or a user to appropriately set again, change, and register a desired headland area when generating and setting a work route on which a work vehicle (autonomous work vehicle) works while traveling (see Patent Document 1, for example). In the related art, the headland area is composed of a first headland area that includes turning and a second headland area that does not include turning.

In the related art, in a case where an operator selects a first mode of setting the first headland area and the second headland area to minimum values, the respective values of the headland areas are automatically input. In this case, the width of the first headland area including turning is determined by the turning width within which the work vehicle can turn and a safety margin (approximately 1 m). In addition, the width of the second headland area that does not include turning is determined by the width required for the work vehicle to travel and a safety margin (approximately 1 m).

### PRIOR ART DOCUMENT

### PATENT DOCUMENT

Patent Document 1: Japanese Patent Laid-open No. 2021-129554

### SUMMARY OF INVENTION

### TECHNICAL PROBLEM

In a configuration of the related technology described above, the safety margin is a fixed value, and therefore, for example, even in a case where it is possible to move the work vehicle closer to an outline of the working ground due to a field status of the working ground (field) or a working method, it is difficult for the work vehicle to travel on such a route.

An object of the present invention is to provide a control method for a work vehicle, a control program for a work vehicle, a control system for a work vehicle, and a work system, which enable a work vehicle to travel on a more appropriate route.

### SOLUTION TO PROBLEM

A control method for a work vehicle according to an aspect of the present invention is a control method for a work vehicle capable of performing work while traveling on a working ground, and includes: setting a position of an allowable limit line that is defined by a margin value which is a distance to inside of the working ground, based on an outline of the working ground, and that is a limit position at which protrusion of the work vehicle is allowed; and generating a route for causing the work vehicle to travel on the basis of the allowable limit line.

A control method for a work vehicle according to another aspect of the present invention is a control method for a work vehicle capable of performing work while traveling on a working ground, and includes: setting an allowable limit line that is defined by a margin value which is a distance to inside of the working ground, based on an outline of the working ground, and that is a limit position at which protrusion of the work vehicle is allowed; and causing the work vehicle to automatically travel on the basis of the allowable limit line.

A control program for a work vehicle according to an aspect of the present invention is a control program for causing one or more processors to execute the control method for a work vehicle.

A control system for a work vehicle according to an aspect of the present invention is used for a work vehicle capable of performing work while traveling on a working ground. The control system for a work vehicle includes a setting processing unit, and a generation processing unit. The setting processing unit sets a position of an allowable limit line that is defined by a margin value which is a distance to inside of the working ground, based on an outline of the working ground, and that is a limit position at which protrusion of the work vehicle is allowed. The generation processing unit generates a route for causing the work vehicle to travel on the basis of the allowable limit line.

A work system according to an aspect of the present invention includes: the control system for a work vehicle; and a body of the work vehicle.

### ADVANTAGEOUS EFFECTS OF INVENTION

According to the present invention, it is possible to provide a control method for a work vehicle, a control program for a work vehicle, a control system for a work vehicle, and a work system, which enable a work vehicle to travel on a more appropriate route.

### BRIEF DESCRIPTION OF DRAWINGS

FIG. 1 is a schematic side view illustrating appearance of a work vehicle according to Embodiment 1.
FIG. 2 is a schematic block diagram of a work system according to Embodiment 1.
FIG. 3 is a schematic diagram illustrating an example of a target route in the work system according to Embodiment 1.
FIG. 4 is a schematic plan view illustrating an action example of the work vehicle according to Embodiment 1.
FIG. 5 is a schematic diagram illustrating an example of a target route generated by a control system for a work vehicle according to Embodiment 1.
FIG. 6 is a schematic diagram illustrating an example of the target route generated by the control system for a work vehicle according to Embodiment 1.
FIG. 7 is a schematic diagram illustrating an example of the target route generated by the control system for a work vehicle according to Embodiment 1.
FIG. 8 is a schematic diagram illustrating an example of a margin setting screen in the control system for a work vehicle according to Embodiment 1.
FIG. 9 is a schematic diagram illustrating an example of the outline selection screen in the control system for a work vehicle according to Embodiment 1.
FIG. 10 is a flowchart illustrating an action example of the control system for a work vehicle according to Embodiment 1.
FIG. 11 is a schematic rear view illustrating action of a control system for a work vehicle according to Embodiment 4.
FIG. 12 is a schematic plan view illustrating action of the control system for a work vehicle according to Embodiment 4.
FIG. 13 is a schematic plan view illustrating action of a control system for a work vehicle according to Embodiment 5.
FIG. 14 is a schematic plan view illustrating action of the control system for a work vehicle according to Embodiment 5.

### DESCRIPTION OF EMBODIMENTS

Hereinafter, embodiments of the present invention will be described with reference to the attached drawings. The following each embodiment is an example of the present invention and is not intended to limit the technical scope of the present invention.

### (Embodiment 1)

### [1] Overall Configuration

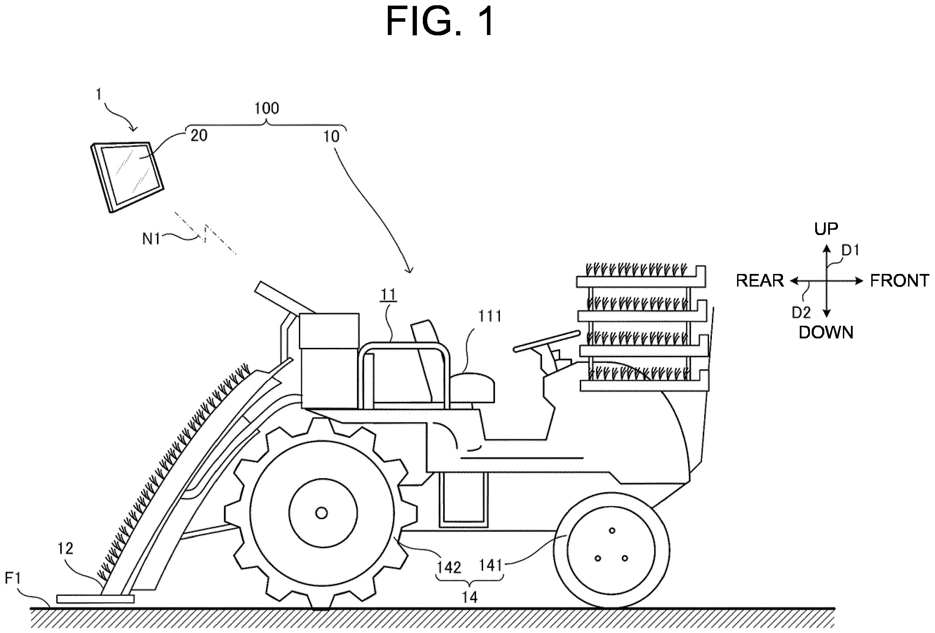

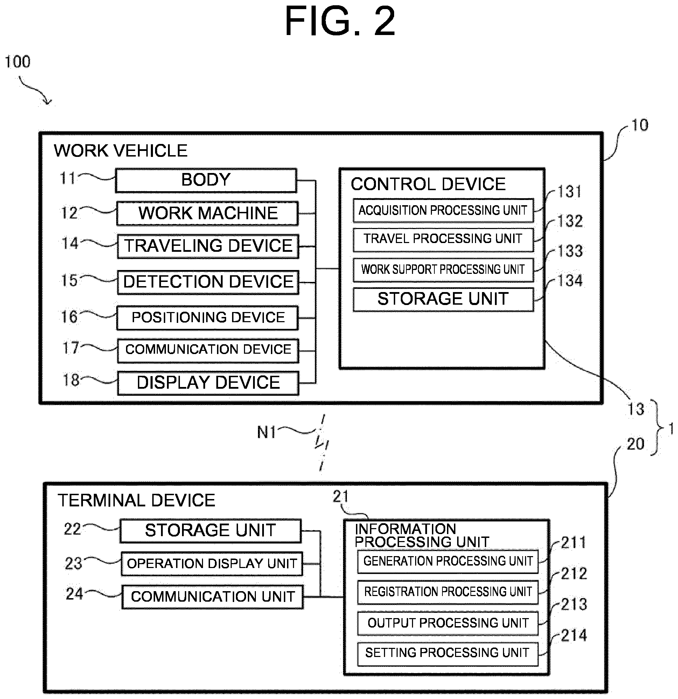

Now, an overall configuration of a work system 100 according to this embodiment will be described with reference to FIG. 1 and FIG. 2. The control system 1 for a work vehicle (hereinafter, also simply referred to as a "control system 1") according to this embodiment includes the work system 100 together with a body 11 of a work vehicle 10. The body 11 is mounted with a work machine 12. That is, the work system 100 includes the control system 1 for a work vehicle, and the body 11 of the work vehicle 10.

In this embodiment, the control system 1 includes a control device 13 installed on the body 11 of the work vehicle 10 (see FIG. 2), and a terminal device 20. The work vehicle 10 and the terminal device 20 are communicable with each other. In this disclosure, the "communicable" means enabling transmission and reception of information directly or indirectly via a communication network N1, a repeater, or the like using an appropriate communication method, such as wired communication or wireless communication (communication using radio waves or light as a medium). The work vehicle 10 and the terminal device 20 are communicable with each other via the communication network N1, such as the Internet, a Local Area Network (LAN), a Wide Area Network (WAN), a public telephone line, a mobile phone network, a packet network, and a wireless LAN. A communication means between the work vehicle 10 and the terminal device 20 is not limited to the above example and may be realized by any appropriate communication means. Furthermore, it is not an essential configuration of the control system 1 that the work vehicle 10 and the terminal device 20 are communicable with each other.

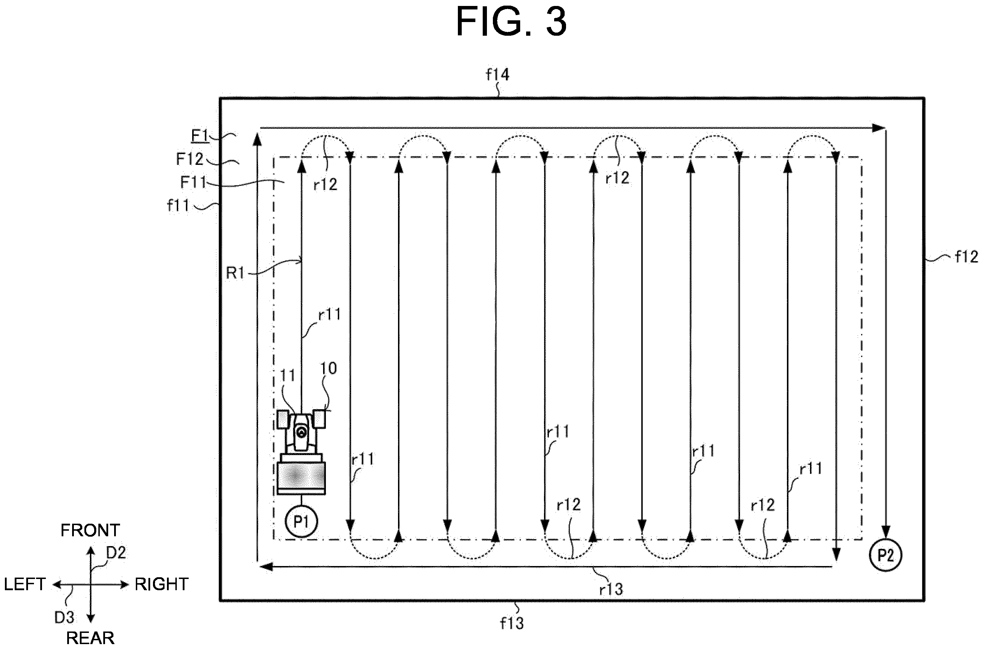

The work vehicle 10 performs some work on a working ground F1 by using the work machine 12 while traveling on the working ground F1 (see FIG. 3). In this disclosure, the "work" refers to work that the work machine 12 performs on the working ground F1, and includes various types of agricultural work such as planting (rice planting), sowing, fertilizing, spraying pesticides, leveling, and harvesting, and various types of work such as construction work. In this embodiment, as an example, the work performed by the work vehicle 10 is planting (rice planting) work of planting seedlings in a paddy field as the working ground F1.

The work machine 12 performs work within the working ground F1 when the body 11 of the work vehicle 10 moves on the working ground F1. In this embodiment, as an example, the work machine 12 includes a seedling placement table on which a seedling mat is placed, and a planting arm that picks up seedlings from the seedling mat and plants the seedlings, so as to perform seedling planting work. Herein, the work machine 12 is mounted on the rear side of the body 11 (opposite to the forward direction side of the body 11). In other words, the work machine 12 is coupled to the rear side of the body 11, and when the body 11 moves forward, the work machine 12 performs work while moving forward together with the body 11. In this embodiment, the work machine 12 is included as a component of the work vehicle 10, but the work machine 12 may not be included as the component of the work vehicle 10.

In this disclosure, the "work vehicle" means a machine that performs various types of work in the working ground F1 such as a field, and examples of such machines include an agricultural machinery (farm machinery) such as a rice transplanter, a tractor, a seeder, a spreader, a sprayer, a transplanter, and a harvester. The work vehicle 10 may be, for example, a construction machine (construction machinery). In this embodiment, unless otherwise specified, the work vehicle 10 will be described as a rice transplanter as an example. In this work vehicle 10, the body 11 travels along the working ground F1 such as a field, so that it is possible to perform planting work by receiving seedlings in the working ground F1.

Also, in this embodiment, as an example, the work vehicle 10 is an automated machine that enables action by automatic driving (autonomous traveling and autonomous work) while allowing a person (operator) to get in the work vehicle. However, the present invention is not limited to this, and the work vehicle 10 may be an unmanned vehicle that performs action by autonomous driving, or may perform action by operation (including remote operation) of a person (operator).

In this disclosure, the "working ground" refers to an area in which the work vehicle 10 performs various types of work such as planting (rice planting), sowing, fertilizing, spraying pesticides, leveling, and harvesting, and includes a paddy field, an upland field, an orchard, and a pasture, while moving.

For example, in a case where a paddy field or an upland field that grows crops (agricultural products) such as rice, wheat, soybeans, and buckwheat is the working ground F1, the crops grown in the working ground F1 are agricultural products. Furthermore, in a case where plants are grown in a plant field, the plant field is the working ground F1, and in a case where trees are grown to produce timber in a forest, such as in forestry, the forest is the working ground F1. In this case, the crops grown in the working ground F1 are plants, trees, or the like. In this embodiment, unless otherwise specified, the work vehicle 10 is used for planting work of seedlings in a field (working ground F1), and the working ground F1 will be described as a paddy field for growing rice. In addition, the working ground F1 is not limited to a field. For example, in a case where the work vehicle 10 is a construction machine, a site where the construction machine works is the working ground F1.

In addition, the work vehicle 10 can automatically travel not only in the working ground F1 (herein, the field) but also on a road outside the working ground F1 such as a route outside the field outside the working ground F1. The work vehicle 10 is configured to be capable of automatically traveling (moving) along a target route (including the route outside the field) that is preset inside and outside the working ground F1, on the basis of position information of a current position of the work vehicle 10 measured by a positioning device 16 (see FIG. 2). The route outside the field is, for example, an inter-field connection path that connects a plurality of the working grounds F1 (fields). The inter-field connection path may be a farm road, a forest road, a public road, a private road, a highway, or the like, and may be a road exclusively for the work vehicle 10 or may be a road that general vehicles (such as passenger cars) can use.

### [2] Configuration of Work Vehicle

Now, a configuration of the work vehicle 10 according to this embodiment will be described in detail with reference to FIG. 1 and FIG. 2.

In this embodiment, for convenience of description, the vertical direction in a state in which the work vehicle 10 is in a usable state is defined as the up-down direction D1. The front-rear direction D2 and the left-right direction D3 (see FIG. 3) are each defined with the direction seen by a person (operator) who gets in the body 11 (driving unit 111) of the work vehicle 10 as a reference. The left side in the left-right direction D3 refers to the left side when the body 11 moves forward (advances), and the right side in the left-right direction D3 refers to the right side when the body 11 moves forward (advances). However, these directions are not intended to limit the direction of use (direction during use) of the work vehicle 10.

As illustrated in FIG. 2, the work vehicle 10 includes the control device 13, a traveling device 14, a detection device 15, a positioning device 16, a communication device 17, and a display device 18 in addition to the body 11 and the work machine 12. The control device 13, the traveling device 14, the detection device 15, the positioning device 16, the communication device 17 and the display device 18 are all mounted on the body 11.

The body 11 has the driving unit 111 (see FIG. 1) in which a person (operator) can get. In the driving unit 111, a steering device, a transmission, an operating device, and the like are disposed. The steering device, the transmission, the operating device, and the like are operating units operated by an operator or the control device 13. Therefore, the work vehicle 10 can perform both manual driving by manual operation by an operator and automatic driving by the control device 13. As described above, the work machine 12 is coupled to the rear side of the body 11.

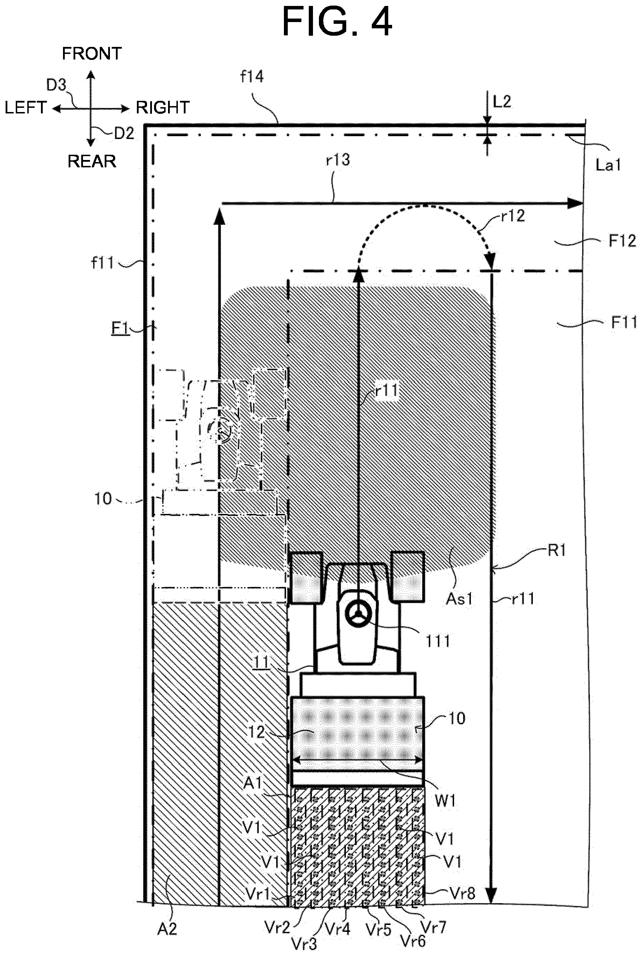

In this embodiment, the work machine 12 is coupled to the rear side of the body 11, and when the body 11 moves forward, planting work can be performed on the field as the working ground F1. Herein, the work machine 12 is suitable for planting a plurality of rows (for example, 6, 7, or 8 rows) and has a working width W1 (see FIG. 4) corresponding to the number of rows in the width direction (left-right direction D3). That is, for example, when the work machine 12 is suitable for planting seven rows, the work machine 12 can simultaneously accept seven rows of seedlings in the width direction (left-right direction D3). In this embodiment, as an example, it is assumed that the work vehicle 10 is an eight-row rice transplanter including the work machine 12 suitable for eight rows.

Thus, the work vehicle 10 according to this embodiment is capable of working on a plurality of working rows arranged in the direction (left-right direction D3) intersecting with the traveling direction (front-rear direction D2) while traveling on the working ground F1. As an example in this embodiment, the work vehicle 10 is an 8-row rice transplanter, and therefore a plurality of working rows Vr1 to Vr8 (see FIG. 4) are 8 seedling rows in which a plurality of seedlings V1 (see FIG. 4) are arranged in the traveling direction (front-rear direction D2) at predetermined intervals in the left-right direction D3. In other words, work vehicle 10 can perform parallel (simultaneous) planting work on the eight working rows Vr1 to Vr8. Therefore, the work vehicle 10 can simultaneously plant the maximum eight working rows Vr1 to Vr8 while moving forward.

The traveling device 14 has front wheels 141, rear wheels 142, and a power source (such as an engine and/or a motor), as illustrated in FIG. 1. The front wheels 141 and the rear wheels 142 are provided in pairs, for example, on the left and right sides, respectively. The rear wheels 142 are driven with power generated by the power source, so that the traveling device 14 is capable of traveling (moving) the body 11. Herein, the front wheels 141 function as steering wheels and enable turning in the left-right direction D3. Consequently, the body 11 can travel so as to move in the front-rear direction D2 and the left-right direction D3 within the working ground F1.

At least during autonomous traveling, the traveling device 14 performs action in accordance with operation by the control device 13, such as the steering device, the transmission, the operating device, and the like, as described above. For example, in the traveling device 14, the angles of the front wheels 141 are changed by a hydraulic power steering mechanism or the like in response to the operation of the steering device by the control device 13, and the traveling direction of the body 11 is changed. In addition, in response to the operation of the transmission by the control device 13, a gear of the transmission is switched to a forward gear, a reverse gear, or the like, and a traveling mode of the body 11 is switched to forward traveling, reverse traveling, or the like. In addition, the control device 13 controls the rotation speed of the power source by operating an accelerator or a brake of the operating device, and brakes the front wheels 141 and the rear wheels 142 by using electromagnetic brakes.

The detection device 15 detects a detection object (obstacle) in a detection area As1 (see FIG. 4). In this embodiment, examples of the detection object include a person and other animal, a moving object such as a vehicle (including other work vehicle), a structure such as a wall and a pillar, a plant, a step, and other obstacle. The detection device 15 may include various sensors, such as a radar, a sonar sensor, a Light Detection and Ranging (LiDAR), a human presence sensor, and a camera (image sensor). Herein, the detection device 15 is preferably a three-dimensional sensor capable of measuring a distance and the direction to a detection object by a Time Of Flight (TOF) method of measuring the distance to a distance measurement point on the basis of round-trip time during which it takes for light or sound to reach the distance measurement point and return, a stereo camera method, or the like. Consequently, the detection device 15 can output measurement information including a position of the detection object in plan view to the control device 13. In this embodiment, as an example, it is assumed that the detection device 15 is a radar using millimeter waves (millimeter wave radar) or a sonar sensor using ultrasonic waves (or sound waves).

The positioning device 16 determines a current position (such as latitude, longitude, and altitude) of the body 11. Specifically, the positioning device 16 calculates the current position (latitude and longitude) of the body 11 using a satellite positioning system such as the Global Navigation Satellite System (GNSS). That is, the positioning device 16 has a positioning antenna that receives a positioning signal from a satellite and calculates the current position on the basis of the positioning signal. Furthermore, the positioning device 16 includes an inertial sensor and can detect current orientation and other attitude of the body 11.

In addition, the positioning device 16 may detect the current position with a relatively high degree of accuracy, using Real Time Kinematic (RTK) positioning in which correction information corresponding to a base station (reference station) close to the work vehicle 10 is used and the current position of the work vehicle 10 is calculated. The current position of the body 11 may be the same as a positioning position (position of the positioning antenna) or may be a position shifted from the positioning position, such as a center position of the body 11 in a plan view. The positioning device 16 may be, for example, a mobile phone terminal, a smartphone, a tablet terminal, or the like.

The communication device 17 is a communication interface for connecting the work vehicle 10 (such as the control device 13 and the positioning device 16) to an external device via a wired or wireless connection and performs data communication with the external device in accordance with a predetermined communication protocol. In this embodiment, the communication device 17 can communicate with at least the terminal device 20 which is an external device, via the communication network N1. Furthermore, the communication device 17 can be connected to the communication network N1 at least wirelessly, and can communicate with the terminal device 20 at any time even while the work vehicle 10 is moving (traveling) on the working ground F1. The communication device 17 may be, for example, a mobile phone terminal, a smartphone, a tablet terminal, or the like.

The display device 18 is a user interface for presenting information to a user (operator), such as a liquid crystal display and an organic electroluminescence display that displays various information. The display device 18 is disposed in, for example, the driving unit 111, and presents various information to the operator by displaying a screen including various pieces of information. In this disclosure, the "screen" means a picture (image) displayed on the display device 18 or the like, and includes an image, a figure, a photograph, a text, video, and the like. The screen displayed on the display device 18 includes not only an image but also a picture (video) that changes from moment to moment. Furthermore, the display device 18 has a function of outputting sound (including voice) to the user (operator) and a function of accepting operation by the user (operator).

The control device 13 is mainly composed of a computer system having one or more processors such as a Central Processing Unit (CPU) and one or more memories such as a Read Only Memory (ROM) and a Random Access Memory (RAM), and performs various processes (information process). In this embodiment, the control device 13 is mainly composed of a computer system having one or more processors, and therefore the control device 13 is realized by execution of a control program for the work vehicle by the one or more processors. In this embodiment, the control device 13 is an integrated controller that controls the entire work vehicle 10, and is composed of, for example, an electronic control unit (ECU). However, the control device 13 may be provided separately from the integrated controller.

The control device 13 is configured to be communicable with a device installed in each part of the body 11. That is, the control device 13 is electrically connected to the work machine 12, the traveling device 14, the detection device 15, the positioning device 16, the communication device 17, the display device 18, and the like. Consequently, the control device 13 can control the work machine 12, the traveling device 14, and the like, and can acquire detection results of the detection device 15 and the positioning device 16. Herein, the control device 13 may exchange various information (data) with each device directly, or indirectly via a repeater or the like.

In this embodiment, the control device 13 includes an acquisition processing unit 131, a travel processing unit 132, a work support processing unit 133, and a storage unit 134, as illustrated in FIG. 2.

The acquisition processing unit 131 executes an acquisition process of acquiring working ground information related to the working ground F1. Herein, the working ground information includes outline information based on the outline of the working ground F1. That is, the acquisition processing unit 131 acquires the outline information based on the outline of the working ground F1.

The travel processing unit 132 executes a travel process of controlling the traveling device 14. As an example, the travel processing unit 132 controls the traveling device 14 on the basis of the current position of the work vehicle 10 calculated by the positioning device 16 and a preset target route, so that the travel processing unit 132 performs automatic traveling of the work vehicle 10. Furthermore, the travel processing unit 132 controls the work machine 12 on the basis of the current position of the work vehicle 10 calculated by the positioning device 16 and the preset target route, so that the travel processing unit 132 performs work (planting work in this embodiment) by the work vehicle 10 at an appropriate position on the target route.

Specifically, when the travel processing unit 132 acquires a travel start instruction from the terminal device 20, the travel processing unit 132 causes the work vehicle 10 to start automatic traveling. For example, when the operator presses a start button on an operation screen of the terminal device 20, the terminal device 20 outputs a travel start instruction to the work vehicle 10. Consequently, for example, the work vehicle 10 starts automatic traveling in accordance with a target route R1 (see FIG. 3) in the working ground F1, and performs work (planting work in this embodiment) using the work machine 12.

The target route R1 for causing the work vehicle 10 to automatically travel is generated, for example, on the terminal device 20. That is, the work vehicle 10 acquires route data corresponding to the target route R1 from the terminal device 20 and automatically travels in accordance with the target route R1.

In addition, the travel processing unit 132 stops the automatic traveling of the work vehicle 10 when the travel processing unit 132 acquires a travel stop instruction from the terminal device 20. For example, when an operator operates a stop button on the operation screen of the terminal device 20, the terminal device 20 outputs a travel stop instruction to the work vehicle 10.

In addition, the "automatic traveling/automatically travel" in this disclosure includes "autonomous traveling" in which the work vehicle 10 travels autonomously without the operation of an operator, and "semi-automatic traveling", in which only steering is automated, such as straight-line assist.

The "autonomous traveling" is a traveling mode in which, for example, the steering wheels (front wheels 141) are automatically steered and the vehicle speed and other controls are automatically performed such that the work vehicle 10 travels along the target route R1. The "straight-line assist" is a traveling mode in which, for example, only the steering wheels (front wheels 141) are automatically steered such that the work vehicle 10 travels along a straight line route parallel to a reference straight line (base line), and the vehicle speed and the like are controlled by the operator.

As another example, the work vehicle 10 may travel by manual steering by the operator. For example, the operator gets in the work vehicle 10 and causes the work vehicle 10 to travel by manual steering while confirming the target route R1.

The work support processing unit 133 executes a work support process of supporting work (planting work in this embodiment) using the work machine 12. The work support process includes, for example, a process of supporting the operation of the work machine 12 by the operator by presenting (such as displaying and outputting sound) information related to the operation of the work machine 12 on a user interface such as the display device 18, and a process of directly controlling the work machine 12. In this embodiment, basically, the work support processing unit 133 performs the former process (i.e., the process of supporting the operation of the work machine 12 by the operator) as a work support process.

The storage unit 134 is a non-volatile memory that stores various data such as a control program for a work vehicle and target route information related to the target route R1. That is, the travel processing unit 132 can cause the traveling device 14 to perform automatic traveling along the target route R1 on the basis of the target route information stored in the storage unit 134.

Furthermore, in a case where the detection device 15 detects an obstacle as a detection object during at least the automatic traveling of the work vehicle 10, the control device 13 outputs an alarm (including sound and/or light alert) and performs an obstacle avoidance process (including detouring, decelerating, stopping, or the like) by controlling the traveling device 14. Furthermore, the control device 13 may output obstacle position information, an execution history of the avoidance process, and the like to the terminal device 20 and cause the terminal device 20 to display the information.

In addition to the above configuration, the work vehicle 10 further includes a battery, a fuel tank, various sensors, and the like. The battery supplies power for action of various units of the work vehicle 10, such as the control device 13. In particular, electronic devices such as the control device 13, the detection device 15, the positioning device 16, the communication device 17, and the display device 18 can be actuated by power supplied from the battery, even when the power source (engine) of the traveling device 14 is stopped.

### [3] Configuration of Terminal Device

Now, a configuration of the terminal device 20 according to this embodiment will be described in detail with reference to FIG. 1 and FIG. 2.

In this embodiment, the terminal device 20 is communicable with the work vehicle 10 as described above, and constitutes a control system 1 together with the control device 13 of the work vehicle 10. In other words, components of the control system 1 are distributed into at least the work vehicle 10 and the terminal device 20. However, the present invention is not limited to this configuration. For example, a function of the control device 13 may be provided in the terminal device 20. In this case, the components of the control system 1 are realized only by the terminal device 20. Conversely, for example, the function of the terminal device 20 may be provided in the control device 13. In this case, the components of the control system 1 are realized only by the control device 13.

In this embodiment, as an example, the terminal device 20 is composed of a general-purpose terminal such as a tablet terminal, a smartphone, and a laptop computer. The terminal device 20 includes an information processing unit 21, a storage unit 22, an operation display unit 23, and a communication unit 24, as illustrated in FIG. 2. Furthermore, the terminal device 20 further includes a sound output unit that outputs sound (including voice) to the user (operator), a battery, and the like.

The information processing unit 21 is mainly composed of a computer system having one or more processors such as a CPU and one or more memories such as a ROM and a RAM, and performs various processes (information process). In this embodiment, the information processing unit 21 is mainly comprised of a computer system having one or more processors, and therefore the information processing unit 21 is realized by one or more processors that execute a control program for the work vehicle. In other words, one or more processors of the control device 13 included in the control system 1 and one or more processors of the information processing unit 21 each execute a control program for the work vehicle, so that the control device 13 and the terminal device 20 cooperate to realize the control system 1.

The information processing unit 21 is configured to be communicable with each unit of the terminal device 20 (the storage unit 22, the operation display unit 23, and the communication unit 24). That is, the information processing unit 21 is electrically connected to the storage unit 22, the operation display unit 23, and the communication unit 24. Consequently, the information processing unit 21 can read and write information to and from the storage unit 22, control display of the operation display unit 23, and acquire operation input to the operation display unit 23. Herein, the information processing unit 21 may exchange various information (data) with each unit directly or indirectly via a repeater or the like.

Such a terminal device 20 is a user interface for accepting operation input from a user (operator) and outputting various information to the user. For example, the terminal device 20 accepts various operation by the user by outputting an electrical signal corresponding to operation to the operation display unit 23 by the user. Furthermore, the terminal device 20 outputs various information to the user by displaying various screens on the operation display unit 23.

The storage unit 22 is a non-volatile memory that stores various data such as the control program for a work vehicle and the target route information related to the target route R1, and the like. Furthermore, the storage unit 22 can store various data such as work machine information, work vehicle information, field information, and work information. The work machine information is information related to the work machine 12 mounted on the body 11, and includes, for example, a type, identification information, a model name, a model number, and size (dimensions) of the work machine 12. The work vehicle information is information related to the body 11 (vehicle body) of the work vehicle 10, and includes, for example, the type, the identification information, the model name, the model number, the size (dimensions), and the like of the body 11 (e.g., a half crawler type/wheel type, or the like). The field information is information related to the field which is the working ground F1, and includes information such as field identification information, a field name, a position, a shape, size, a work start position (traveling start position) where the work starts, a work end position (traveling end position) where the work ends, and the working direction. The work information is information related to work performed by the work vehicle 10, including, for example, the type of work and how the work is to be performed specifically. Furthermore, the work information may also include information related to the presence or absence of coordinated work by the work vehicles 10, the width of headland, and the width of non-cultivated land.

The information stored in the storage unit 22 (such as the target route information, the work machine information, the work vehicle information, the field information, and the work information) is set (registered) by inputting operation to the operation display unit 23 by the user (operator) or by acquiring the information from the work vehicle 10. For example, the type of the work machine 12 in the work machine information may be specified by operation to the operation display unit 23 by the user, or the work vehicle 10 may automatically determine the work machine 12 mounted on the body 11 and transmit the work machine information to the terminal device 20. The terminal device 20 may acquire this information from an external device (such as a server, an external storage medium, and another terminal device) other than the work vehicle 10.

The operation display unit 23 is a user interface that includes a display unit such as a liquid crystal display and an organic EL display that displays various information, and an operating unit such as a touch panel, a mouse, a keyboard, a mechanical switch, and an encoder that accepts operation. As an example, the operator can operate the operating unit of the operation display unit 23 to set (register) various information on the operation screen displayed on a display unit of the operation display unit 23. For example, the operator can set automatic traveling information (including target route information) related to the automatic traveling of the work vehicle 10.

The operation display unit 23 displays progress of the work on the working ground F1, as well as an action status of the work vehicle 10, including the target route R1, (actual) movement trajectory, a current position, and the movement speed of the work vehicle 10, so that the operator can perform short-range monitoring and remote monitoring of the work vehicle 10 during automatic driving. The short-range monitoring means, for example, monitoring within a visible range for an operator, and the remote monitoring, for example, means monitoring by a picture of the surroundings of the work vehicle 10 displayed on the terminal device 20. With remote monitoring, it is possible to monitor a plurality of the work vehicles 10 by using the single terminal device 20. However, these definitions are merely examples and other definitions may be used. Herein, the action status of the work vehicle 10 also includes the detection result of the detection object by the detection device 15. Furthermore, the operation display unit 23 can accept the travel start instruction, the travel stop instruction, or the like for the work vehicle 10 from the operator. The terminal device 20 can remotely control the work vehicle 10 by transmitting the travel start instruction, the travel stop instruction, or the like to the work vehicle 10. Therefore, the operator can remotely control the work vehicle 10.

The communication unit 24 is a communication interface for connecting the terminal device 20 to the work vehicle 10 by wire or wirelessly and performing data communication with the work vehicle 10 according to a predetermined communication protocol. In this embodiment, the communication unit 24 is communicable with at least (the communication device 17 of) the work vehicle 10 via the communication network N1. Furthermore, the communication unit 24 can be connected to the communication network N1 at least wirelessly, and therefore it is possible to communicate with the work vehicle 10 at any time even when the communication unit 24 is located sufficiently far away from the work vehicle 10.

In this embodiment, the information processing unit 21 includes a generation processing unit 211, a registration processing unit 212, an output processing unit 213, and a setting processing unit 214, as illustrated in FIG. 2. As an example in this embodiment, the information processing unit 21 is mainly composed of a computer system having one or more processors, and therefore a plurality of these functional units (such as the generation processing unit 211) are realized by execution of the control program for a work vehicle by the one or more processors. The plurality of functional units included in the information processing unit 21 may be distributed into a plurality of housings, or may be provided in a single housing.

The generation processing unit 211 executes a route generation process for generating a route (target route R1) for causing the work vehicle 10 to travel (automatically travel) on the working ground F1. Herein, the generation processing unit 211 generates the target route R1 on the basis of on data for generation, including the work machine information, the work vehicle information, the field information, the work information, and the like, stored in the storage unit 22. That is, the generation processing unit 211 generates the target route R1 on the basis of the work machine information, the work vehicle information, the field information, the work information, and the like, which are set (registered) by operation input to the operation display unit 23 by the user (operator), for example.

Specifically, the generation processing unit 211 generates the target route R1 within the working ground F1 on the basis of a traveling start position P1 (see FIG. 3) and the traveling end position P2 (see FIG. 3) included in the field information.

For example, the generation processing unit 211 generates the target route R1 for moving the body 11 of the work vehicle 10 from the traveling start position P1 to the traveling end position P2 within the working ground F1 on the basis of the data for generation.

In this embodiment, the field information included in the data for generation includes the outline information based on the outline of the working ground F1. In addition, the outline information includes information related to an allowable limit line La1 (see FIG. 4). The "allowable limit line" in this disclosure is a virtual line that is defined by a margin value L2 (see FIG. 4) which is a distance to the inside of the working ground F1, based on the outline of the working ground F1, and that is a limit position at which protrusion of the work vehicle 10 is allowed. Therefore, the generation processing unit 211 can generate a route (target route R1) for causing the work vehicle 10 to travel on the basis of at least the allowable limit line La1.

The registration processing unit 212 executes a registration process of registering the work machine information, the work vehicle information, the field information, the work information, and the like. That is, the work machine information, the work vehicle information, the field information, the work information, and the like used to generate the target route R1 are each registered (set) by the registration processing unit 212, for example, by operation input to the operation display unit 23 by the user (operator).

The output processing unit 213 executes an output process, for example, of outputting route data of the target route R1 to the work vehicle 10. That is, the route data related to the target route R1 generated by the generation processing unit 211 is output from the output processing unit 213 to, for example, the communication unit 24, and is transmitted from the communication unit 24 to the work vehicle 10.

For example, when the operator starts work, the operator selects the field (working ground F1), selects the work, confirms the target route R1, or the like, and issues a work start instruction. When the operator issues the work start instruction, the output processing unit 213 transmits (outputs) the route data of the target route R1 generated by the generation processing unit 211 to the work vehicle 10. When the work vehicle 10 receives the route data generated in the terminal device 20, the work vehicle 10 stores the route data in the storage unit 134. Then, the work vehicle 10 performs automatic driving (autonomous traveling and autonomous work) on the basis of the current position of the work vehicle 10 calculated by the positioning device 16 and the target route R1 specified in the route data.

Furthermore, the output processing unit 213 outputs the generated target route R1 to the operation display unit 23, so that it is possible to display the target route R1 on the operation display unit 23. The form of output from the output processing unit 213 is not limited to transmission or display to the work vehicle 10 as described above, but may be, for example, transmission to another device (such as a user terminal), printing (printout), writing to a non-transitory recording medium, audio output, or the like.

The setting processing unit 214 executes a setting process of setting the position of the allowable limit line La1. That is, in this embodiment, the generation processing unit 211 can generate the route (target route R1) for causing the work vehicle 10 to travel on the basis of the allowable limit line La1, the position of which is set by the setting processing unit 214. Although details will be described later, in this embodiment, the position of the allowable limit line La1 is set by the setting processing unit 214 in response to the operation to the operation display unit 23 by the operator.

The terminal device 20 may be able to access a website (agricultural support site) of an agricultural support service provided by the server via the communication network N1. In this case, the terminal device 20 can function as a terminal for operating the server by execution of a browser program by the information processing unit 21. The server includes each of the above processing units and executes each process.

### [4] Control Method for Work Vehicle

Hereinafter, with reference to FIG. 3 to FIG. 10, an example of a control method for the work vehicle 10 (hereinafter, simply referred to as the "control method") that is executed mainly by the control system 1 (the control device 13 and the terminal device 20) will be described.

The control method according to this embodiment is executed by the control system 1 that is mainly composed of a computer system, and in other words, is embodied in a control program for a work vehicle (hereinafter, simply referred to as the "control program"). That is, the control program according to this embodiment is a computer program that causes one or more processors to execute each process related to the control method.

Herein, the control system 1 executes the following various processes related to the control method in a case where a specific start operation preset for executing the control program is performed. The start operation is, for example, startup operation of an application program (control program for a work vehicle) on the terminal device 20. On the other hand, in a case where preset specific end operation is performed, the control system 1 ends the following various processes related to the control method. The end operation is, for example, end operation of an application program (control program for a work vehicle) on the terminal device 20.

In the following, it is assumed that the working ground F1 is a quadrangular field in plan view as illustrated in FIG. 3, and that one of short sides of the outline (outer peripheral edge) of the working ground F1 is called a "first outline f11", the other short side is called a "second outline f12", one of long sides is called a "third outline f13", and the other long side is called a "fourth outline f14". In addition, in the working ground F1, the traveling start position P1 is located near a corner between the first outline f11 and the third outline f13, and the traveling end position P2 is located near a corner between the second outline f12 and the third outline f13.

### Basic Action

First, basic action of the control system 1 according to this embodiment in a case where the work vehicle 10 is caused to automatically travel along the target route R1 in the working ground F1 consisting of a certain field will be described with reference to FIG. 3 and FIG. 4. FIG. 4 is a schematic enlarged view of a vicinity of a corner between the first outline f11 and the fourth outline f14 in FIG. 3.

In the examples of FIG. 3 and FIG. 4, the target route R1 includes work routes r11, non-work routes r12, and an outer periphery work route r13. The work routes r11 and the outer periphery work route r13 are routes along which the work vehicle 10 travels while performing work using the work machine 12. The non-work routes r12 are routes that connect a plurality of the work routes r11 and allow the work vehicle 10 to perform turning traveling for changing the traveling direction. In addition, the non-work routes r12 are routes on which the work vehicle 10 travels (moves) without performing work using the work machine 12.

In the drawings illustrating the target route R1 such as FIG. 3, the routes on which the work vehicle 10 performs work (the work routes r11 and the outer periphery work route r13) are illustrated with solid lines, and the routes on which the work vehicle 10 does not perform work (the non-work routes r12) are illustrated with dotted lines. In the drawings illustrating the target route R1 such as FIG. 3, the target route R1 (and the work vehicle 10) generated for the working ground F1 in a plan view is schematically illustrated. In FIG. 3 and FIG. 4, the front-rear direction D2 and the left-right direction D3 are directions based on the orientation of the body 11 of the work vehicle 10 illustrated in FIG. 3 and FIG. 4.

More specifically, the target route R1 includes a plurality of the work routes r11 extending between a pair of the long sides (the third outline f13 and the fourth outline f14) of the working ground F1, as illustrated in FIG. 3. That is, in the target route R1 illustrated in FIG. 3, the work routes r11 extending upward from the traveling start position P1 set in the lower left corner of the figure are arranged, and furthermore, the plurality of work routes r11 along (parallel to) the work routes r11 are arranged at regular intervals on the right side of the figure. The plurality of work routes r11 are arranged such that the work routes r11 going from the one long side (third outline f13) of the working ground F1 to the other long side (fourth outline f14) side and the work routes r11 going in the opposite direction are arranged alternately.

Herein, the plurality of work routes r11 are linear routes along which the work vehicle 10 moves forward while performing work using the work machine 12. The interval between the adjacent work routes r11 is set on the basis of the width dimension (working width W1) in the left-right direction D3 of the work machine 12, and the work vehicle 10 travels along the plurality of work routes r11, so that planting work is performed in substantially an entire area of the working ground F1 (excluding a headland area which is an outer peripheral part). Each pair of the adjacent work routes r11 are connected by the non-work route r12, which connects a termination of the one work route r11 on the first outline f11 side and a beginning of the other work route r11 on the second outline f12 side.

In addition, the outer periphery work route r13 is a route that continues to the termination of the final work route r11 (second outline f12 side) of the plurality of work routes r11 and goes around the outer peripheral part of the working ground F1 along the outline (the first to fourth outlines f11 to f14) of the working ground F1. In the example of FIG. 3, the outer periphery work route r13 extends from a lower right corner to a lower left corner, from the lower left corner to an upper left corner, from the upper left corner to an upper right corner, and from the upper right corner to the traveling end position P2 at the lower right corner, so that the outer periphery work route r13 goes around the headland area that is the outer peripheral part of the working ground F1.

According to such a target route R1, the work vehicle 10 performs planting work while reciprocating along the work routes r11 from the traveling start position P1 in parallel in an inside area F11 (inside a dashed line in FIG. 3) excluding the outer periphery area F12, which is the outer peripheral part of the working ground F1. After that, the work vehicle 10 performs the planting work while traveling clockwise around the outer periphery work route r13 toward the traveling end position P2 in the outer periphery area F12. However, when the work vehicle 10 travels along the outer periphery work route r13, the work vehicle 10 preferably travels automatically in a "manned state" in which an operator gets in the body 11. Consequently, the work vehicle 10 can perform planting work in substantially the entire area of the working ground F1, including the outer periphery area F12.

In short, when the work vehicle 10 travels along the work routes r11, the work vehicle 10 performs the work (planting work) using the work machine 12, and therefore, as illustrated in FIG. 4, a plurality of the seedlings V1 are planted in a passing area A1, through which the work vehicle 10 (work machine 12) passes, in the inside area F11. Herein, in the passing area A1, the plurality of (8 rows) working rows Vr1 to Vr8 (seedling rows) are formed side by side in the left-right direction D3 perpendicular to the traveling direction of the work vehicle 10.

Similarly, when the work vehicle 10 travels along the outer periphery work route r13, the work vehicle 10 performs the work (planting work) using the work machine 12, and therefore the plurality of seedlings V1 are planted in a passing area A2, through which the work vehicle 10 (illustrated by an imaginary line (double-dashed line) in FIG. 4) passes, in the outer periphery area F12. Herein, although not illustrated in FIG. 4, in the passing area A2, the plurality of (8 rows) working rows Vr1 to Vr8 (seedling rows) are formed side by side in the left-right direction D3 perpendicular to the traveling direction of the work vehicle 10.

The target route R1 is not limited to the route illustrated in FIG. 3, but may be set as appropriate. In FIG. 3, the work vehicle 10 first travels in the inside area F11 and then in the outer periphery area F12, but the order in which the work vehicle 10 travels is not limited to this. For example, the work vehicle 10 may first travel in the outer periphery area F12 and then travel in the inside area F11.

In addition, in the example of FIG. 3, the non-work routes r12 set in the outer periphery area F12 each include a turning route for a gentle right turn, but a turning mode for changing the orientation of the work vehicle 10 is not limited to a "gentle turn." Each non-work routes r12 may include a turning mode in which the body 11 turns while switching between forward traveling and reverse traveling, such as, a so-called "fishtail turn", in order to enable the body 11 to turn in a limited space. Similarly, the turning mode of the work vehicle 10 at the time of traveling on the outer periphery work route r13 may be an appropriate turning mode such as the "gentle turn" and the "fishtail turn".

In order to realize the automatic traveling of the work vehicle 10 as described above, it is necessary to recognize and register the shape of the working ground F1 in advance. As an example, the operator gets in the work vehicle 10 and drives the work vehicle 10 around the outer periphery of the working ground F1 to be registered (teaching traveling), and the terminal device 20 acquires position information during traveling from the work vehicle 10, recognizes the position and the shape of the working ground F1 on the basis of the position information, and registers the recognized position and shape as the working ground F1. In this teaching traveling, the outer periphery work route r13 is generated on the route on which the work vehicle 10 travels. By registering the working ground F1 on the basis of this teaching traveling or performance information of past traveling routes, it is possible to generate the target route R1 in a state in which an obstacle, which is difficult to be detected using only the detection device 15, such as a culvert is avoided from the beginning.

Furthermore, the plurality of work routes r11 may be generated by leaving a width for a plurality of routes in the outer periphery area F12 of the working ground F1, and the outer periphery work route r13 for a plurality of routes may be generated along the outer periphery of the working ground F1. In this case, the work vehicle 10 travels along the plurality of work routes r11, and then successively travels along a plurality of the outer periphery work routes r13 from the inside to the outside. At that time, it is preferable that the work vehicle 10 automatically travels along the inner outer periphery work route r13 in an unmanned state and automatically travels along the outermost outer periphery work route r13 in a manned state.

### Generation of Target Route

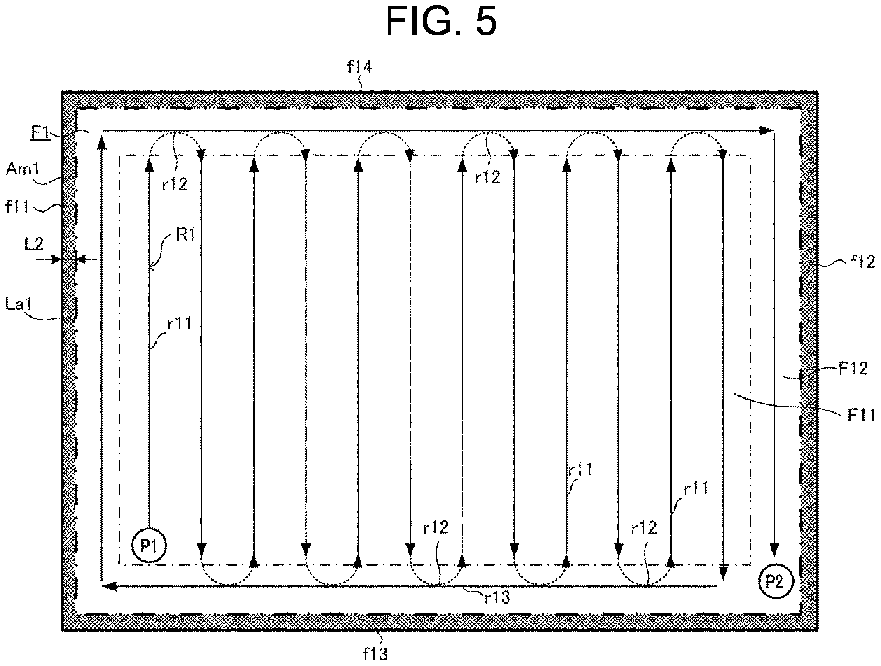

Now, a process related to generation of the target route R1 will be described with reference to FIG. 5 to FIG. 9.

In the control system 1 according to this embodiment, the generation processing unit 211 of the terminal device 20 generates the route (target route R1) for causing the work vehicle 10 to travel (automatically travel) on the working ground F1, as illustrated in FIG. 5. Herein, the generation processing unit 211 generates the target route R1 on the basis of at least the allowable limit line La1 such that the body 11 of the work vehicle 10 does not protrude from the allowable limit line La1.

That is, for example, in consideration of a detection error by the positioning device 16, a safety margin is secured in the outer peripheral part of the working ground F1 to avoid contact with the outer ridge of the working ground F1 by the work vehicle 10, and the target route R1 is generated such that the work vehicle 10 travels further inside the margin. In other words, when the work vehicle 10 travels on the working ground F1, the target route R1 is generated such that the work vehicle 10 does not get as close as possible to the outline (the first to fourth outlines f11 to f14) of the working ground F1, but can travel without protruding from the allowable limit line La1 which is set inside the outline by a margin value L2.

As illustrated in FIG. 5, in a case where the allowable limit line La1 is located inside the outline, an area between the allowable limit line La1 and the outline (shaded area in FIG. 5) becomes a safety margin band Am1. The target route R1 is generated on the basis of the allowable limit line La1 such that the work vehicle 10 does protrude from the allowable limit line La1, which is an inner peripheral edge of the safety margin band Am1, to the outside (to the outline side). Therefore, even when a detection error or the like occurs in the positioning device 16, the work vehicle 10 only protrudes into the safety margin band Am1, and is unlikely to protrude from the outline (the first to fourth outlines f11 to f14).

However, in a case where the margin value L2, which is the width of the above safety margin band Am1, is a fixed value, for example, even in a case where it is possible to move the work vehicle 10 closer to the outline of the working ground F1 due to a status of the working ground F1 or a working method, it is difficult to cause the work vehicle 10 to travel along such a route.

Therefore, in the control method according to this embodiment, a configuration described below enables the work vehicle 10 to travel along a more appropriate route.

That is, the control method for the work vehicle 10 according to this embodiment is a control method for the work vehicle 10 that can perform work while traveling on the working ground F1. This control method includes setting a position of the allowable limit line La1 that is defined by the margin value L2 which is a distance to the inside of the working ground F1, based on the outline (first to fourth outlines f11 to f14) of the working ground F1, and that is a limit position at which protrusion of the work vehicle 10 is allowed, and generating the route (target route R1) for causing the work vehicle 10 to travel on the basis of the allowable limit line La1.

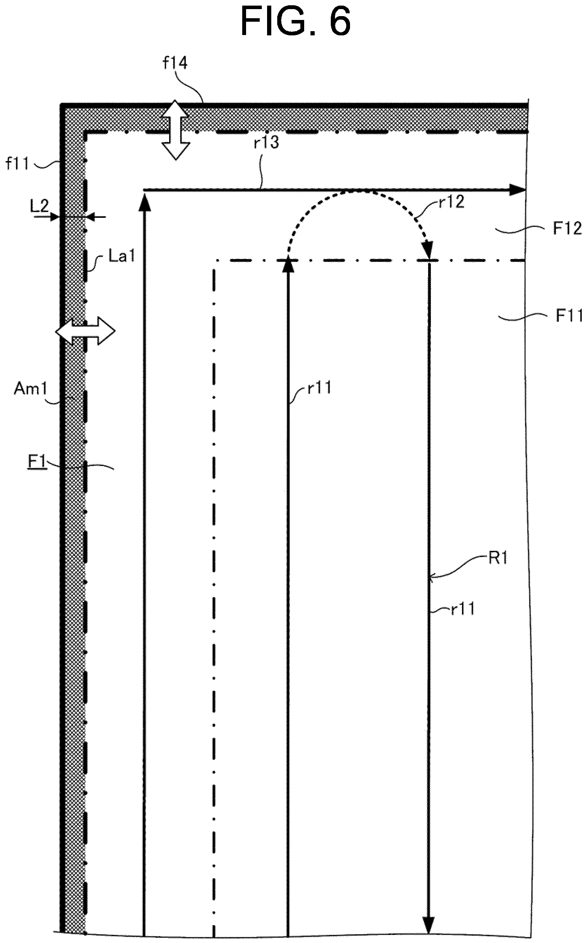

In short, in this embodiment, as illustrated in FIG. 6, it is possible to set (change) the position of the allowable limit line La1 defined by the margin value L2 which is the width of the safety margin band Am1. Therefore, for example, in a case where it is possible to move the work vehicle 10 closer to the outline of the working ground F1 due to the situation of the working ground F1 or the working method, it is possible to generate the route (target route R1) that is closer to the outline of the working ground F1 by reducing the margin value L2 and setting (changing) the allowable limit line La1 to the further outside. As a result, it is possible to cause the work vehicle 10 to travel along a more appropriate route.

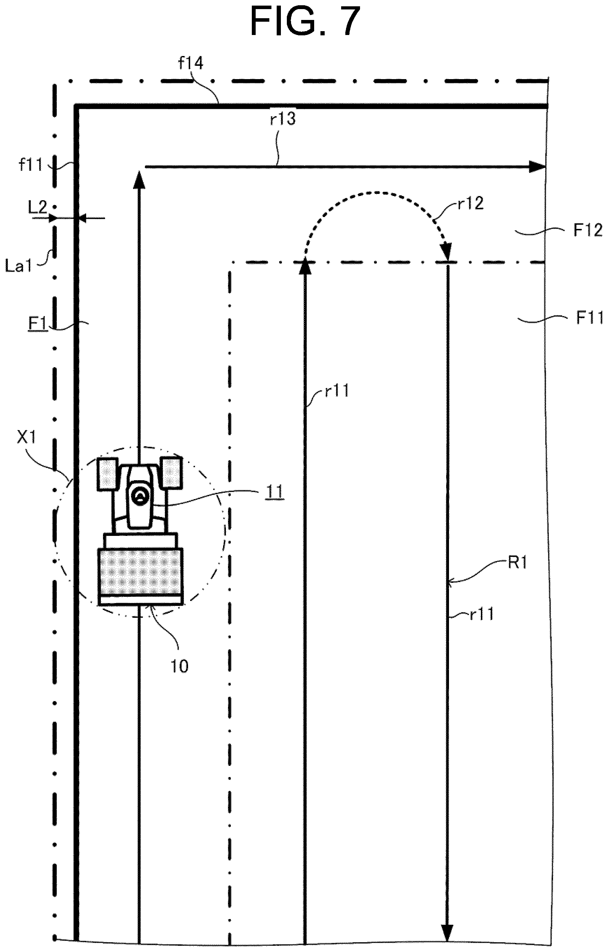

Herein, the margin value L2 includes a negative value. That is, the margin value L2, which is the distance from the outline (the first to fourth outlines f11 to f14) of the working ground F1 to the inside of the working ground F1, can be a positive (+) value as well as a negative (-) value. In a case where the margin value L2 is a negative value, the allowable limit line La1 is located outside the working ground F1 with respect to the outline of the working ground F1 (first to fourth outlines f11 to f14), as illustrated in FIG. 7. In this case, the route (target route R1) simply needs to be generated such that the work vehicle 10 does not protrudes outside the allowable limit line La1, and the work vehicle 10 is allowed to protrude from the outline (first to fourth outlines F11 to F14) of the working ground F1.

For example, depending on the height of the ridge around the working ground F1, the type of the ridge (soil/concrete, or the like), the presence or absence of an obstacle around the working ground F1, the presence or absence of the work machine 12, the working width W1, a raised and lowered state of the work machine 12, and the presence or absence of turning during the traveling of the work vehicle 10, there are cases where there is no problem even when at least a part of the body 11 (including the work machine 12) protrudes outside the working ground F1. At the time of, for example, registration of the working ground F1 (during teaching traveling), in a case where it is confirmed that there is no problem with protrusion outside the working ground F1, a more flexible route can be generated by setting the margin value L2 to a negative value as described above.

In the example of FIG. 7, a virtual circle X1, which indicates a range in which a part of the body 11 of the work vehicle 10 can occupy when the body 11 turns, is illustrated. When the route (target route R1) is generated, it is preferable that the route (target route R1) is generated such that the virtual circle X1 does not protrude outside the allowable limit line La1. Consequently, for example, even when the work vehicle 10 traveling on the target route R1 turns in order to avoid an obstacle, the work vehicle 10 basically stays inside the allowable limit line La1, and is unlikely to protrude from the allowable limit line La1.

In addition, the allowable limit line La1 determines the position of the inside area F11 where the work vehicle 10 reciprocates along the working direction. That is, as described above, in the working ground F1, the inside area F11 and the outer periphery area F12 are set, and the inside area F11 is set further inward from the allowable limit line La1 by the width of the outer periphery area F12. Therefore, when the allowable limit line La1 is set, the inside area F11 where the work vehicle 10 is caused to reciprocate along the working direction is automatically set on the basis of this position.

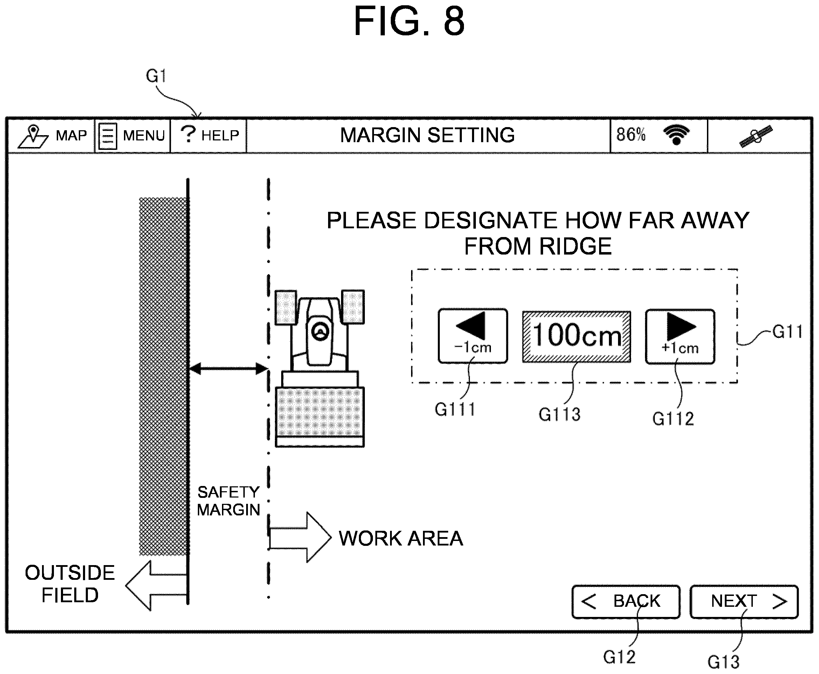

FIG. 8 illustrates an example of a margin setting screen G1 for setting the position of allowable limit line La1. That is, in this embodiment, the position of the allowable limit line La1 is set by the setting processing unit 214 in response to the operation to the operation display unit 23 by the operator, and the operation display unit 23 displays the margin setting screen G1 for setting the position of the allowable limit line La1. In the drawings illustrating a screen displayed on the operation display unit 23 such as FIG. 8, dashed lines, leader lines and reference symbols representing areas are merely added for the purpose of explanation and are not actually displayed on the operation display unit 23.

In the example of FIG. 8, the margin setting screen G1 has a setting section G11 for setting the margin value L2, a back button G12, and a next button G13. The setting section G11 includes a minus button G111, a plus button G112, and a cell G113. The cell G113 displays the current margin value L2 ("100 cm" in the example in FIG. 8). The minus button G111 is an operation button (object) that decreases the margin value L2 by a predetermined pitch width ("1 cm" in the example in FIG. 8) each time the minus button is operated. The plus button G112 is an operation button (object) that increases the margin value L2 by a predetermined pitch width ("1 cm" in the example in FIG. 8) each time the plus button is operated.

Therefore, for example, when the minus button G111 is pressed 10 times from the state illustrated in FIG. 8, the margin value L2 changes to "90 cm". Similarly, for example, when the plus button G112 is pressed five times from the state shown in FIG. 8, the margin value L2 changes to "105 cm". Herein, when the margin setting screen G1 starts, the margin value L2 is set to a default value (e.g., "100 cm"). When the next button G13 is operated, the setting processing unit 214 sets the position of the allowable limit line La1 according to the margin value L2 at that time.

Therefore, the operator can adjust the margin value L2 to any value and set the allowable limit line La1 to any position on the margin setting screen G1 displayed on the operation display unit 23.

Furthermore, when the allowable limit line La1 is set outside the outline of the working ground F1, for example, a question (or option) to ask the operator whether to set a negative value as the margin value L2, such as "Do you want to allow the work vehicle to protrude outside?" may be presented on the margin setting screen G1. On the other hand, in a case where the operator selects "Allow", the margin value L2 is set to a negative value, and the allowable limit line La1 is set outside the outline of the working ground F1. Thus, for example, the operation display unit 23 may interactively accept input from the operator, so that the setting processing unit 214 may set the margin value L2 to a negative value.

In this embodiment, the working ground F1 includes the plurality of outlines (the first to fourth outlines F11 to F14). Herein, the position of the allowable limit line La1 can be set individually for each of the plurality of outlines (first to fourth outlines f11 to f14). That is, the margin value L2 can be set individually for each of the first outline f11, the second outline f12, the third outline f13, and the fourth outline f14. According to the margin value L2 set for the first outline f11, the allowable limit line La1 is set at the position of the margin value L2 inside the first outline f11. On the other hand, according to the margin value L2 set for the second outline f12, the allowable limit line La1 is set at the position of the margin value L2 inside the second outline f12. Therefore, it is possible to set an appropriate safety margin band Am1 for each of the plurality of outlines.

Herein, for an outline (side) that satisfies a specific condition such as facing a farm road (public road) among the plurality of outlines (first to fourth outlines f11 to f14), it is preferable that the setting processing unit 214 does not allow the margin value L2 to be set to a negative value. Whether or not a specific condition is satisfied, for example, whether or not each of the plurality of outlines faces a farm road, can be specified in advance, for example, from map information, or the like. Consequently, for example, for an outline where it is not desirable to set the allowable limit line La1 outside the outline of the working ground F1, it is easy to suppress the protrusion of the body 11 (including the work machine 12) outside the working ground F1. Furthermore, the setting processing unit 214 may allow the margin value L2 to be set to a negative value for the outline (side) that satisfies a specific condition, but may limit the negative value (i.e., an allowable amount of protrusion outside the working ground F1). Herein, the extent of restriction can be determined on the basis of, for example, the height of the ridge around the working ground F1 (input by the operator), the type of the ridge (soil/concrete, or the like), the presence or absence or location of an obstacle around the working ground F1, and the like. In addition, the extent of the "restriction" may be determined on the basis of pictures taken by a camera during teaching traveling, for example, traveling around the outer periphery of the working ground F1.

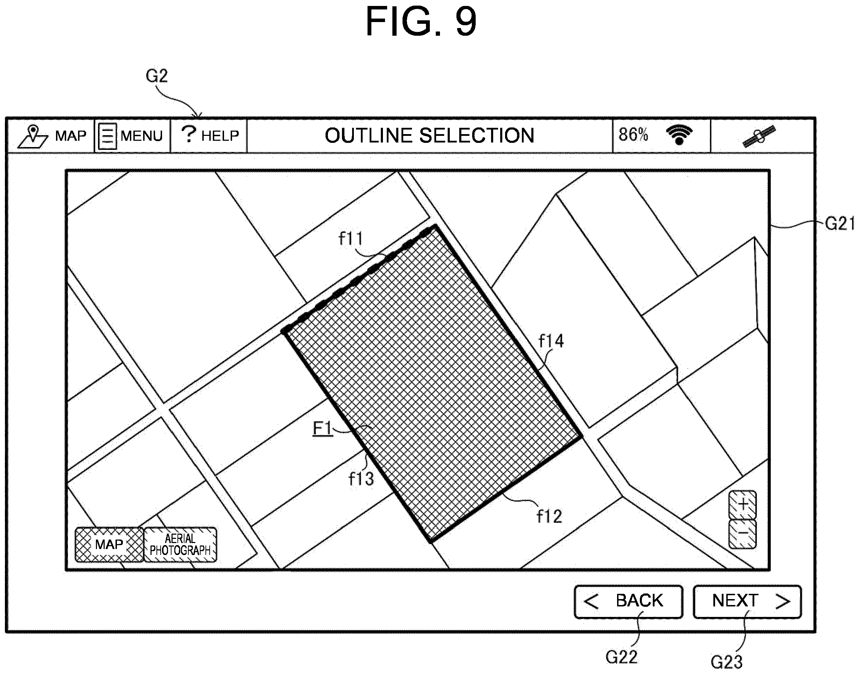

FIG. 9 illustrates an example of an outline selection screen G2 for selecting an outline for setting the allowable limit line La1. In the example of FIG. 9, the outline selection screen G2 has a map unit G21 containing the working ground F1, a back button G22, and a next button G23. The map unit G21 includes the plurality of outlines (first to fourth outlines F11 to F14) of the working ground F1, and each of these plurality of outlines can be selected on the map unit G21.

The outline selected in map unit G21 is highlighted, for example, by blinking. In FIG. 9, a state in which the first outline f11 is selected is illustrated. When the next button G23 is operated, the setting processing unit 214 switches the display screen to the margin setting screen G1 (see FIG. 8) and starts setting the position of the allowable limit line La1 for the currently selected outline (first outline f11 in the example of FIG. 9).

Additionally, the map unit G21 like FIG. 9 may be included in the margin setting screen G1. In this case, it is possible to select the outline and adjust the margin value L2 on the margin setting screen G1. Alternatively, the setting section G11 as illustrated in FIG. 8 may be included in the outline selection screen G2. In this case, it is possible to select the outline and adjust the margin value L2 on the outline selection screen G2.

In addition, the position of the allowable limit line La1 can be set collectively for the plurality of outlines (the first to fourth outlines f11 to f14). That is, the single margin value L2 is set for all the first outline f11, the second outline f12, the third outline f13, and the fourth outline f14. Then, the allowable limit line La1 is set at the position of the margin value L2 inside each of the first outline f11, the second outline f12, the third outline f13, and the fourth outline f14. Therefore, it is relatively easy to set the allowable limit line La1 regardless of the number of outlines (field edges).

Furthermore, in a case where the plurality of outlines (first to fourth outlines f11 to f14) are divided into the plurality of groups depending on the working direction, the position of the allowable limit line La1 can be set individually for each of the plurality of groups. That is, for example, it is considered that a case where the outlines (the first outline f11 and the second outline f12) along the extension direction (working direction) of the work routes r11 are classified into a first group, and the outlines (the third outline f13 and the fourth outline f14) intersecting the extension direction (working direction) of the work routes r11 are classified into a second group. In this case, the position of the allowable limit line La1 is set collectively for the first outline f11 and the second outline f12, which belong to the first group, and the position of the allowable limit line La1 is set collectively for the third outline f13 and the fourth outline f14, which belong to the second group. Therefore, it is relatively easy to set the allowable limit line La1.

Herein, the operator may be able to select whether to set the position of the allowable limit line La1 individually for each of the plurality of outlines, collectively, or individually for each of the plurality of group.

In addition, the control method according to this embodiment further includes designating a traveling mode of the work vehicle 10 in accordance with a setting mode related to the setting of the position of the allowable limit line La1. That is, when the allowable limit line La1 is set, the traveling mode of the work vehicle 10 is automatically designated in accordance with the setting mode. Consequently, it is possible to automatically designate an appropriate traveling mode in accordance with the width of the safety margin band Am1.

Herein, the traveling mode includes manned traveling which requires an operator to get in the work vehicle 10, or unmanned traveling which does not require an operator to get in the work vehicle 10. As a default, the unmanned traveling is preferably designated.

As an example, when the margin value L2 that defines the position of the allowable limit line La1 is greater than a determination threshold value, the traveling mode is designated as the unmanned traveling. On the other hand, when the margin value L2 that defines the position of the allowable limit line La1 is equal to or less than the determination threshold value, the traveling mode is designated as the manned traveling. Thus, the manned traveling/unmanned traveling is automatically designated in accordance with the setting mode related to the setting of the position of the allowable limit line La1, so that it becomes possible to automatically designate the appropriate traveling mode in accordance with the width of the set safety margin band Am1.

In addition, the traveling mode includes a turning mode. The "turning mode" referred herein is the traveling mode in which the work vehicle 10 turns, and includes, for example, a "gentle turn" or a "fishtail turn".

As an example, when the margin value L2 that defines the position of the allowable limit line La1 is greater than the determination threshold value, a turning mode in which a bulge in the left-right direction D3 of the body 11 is relatively large, such as the "gentle turn", is designated as the turning mode. On the other hand, when the margin value L2 that defines the position of the allowable limit line La1 is equal to or less than the determination threshold value, for example, a turning mode in which the bulge in the left-right direction D3 of the body 11 is relatively small, such as the "fishtail turn", is designated. Thus, the turning mode is automatically designated in accordance with the setting mode related to the setting of the position of the allowable limit line La1, so that it becomes possible to automatically designate an appropriate traveling mode in accordance with the width of the set safety margin band Am1.

Herein, a relative relationship between the traveling mode and the setting mode may be applied to the same single work. That is, for example, when automatic traveling is performed once in a certain working ground F1 in a state in which the allowable limit line La1 is set to designate manned traveling as the traveling mode, unmanned traveling may be designated as the traveling mode for the next or subsequent work on the working ground F1. Consequently, the traveling mode is designated only once in accordance with the allowable limit line La1, and it is possible to designate a more appropriate traveling mode.

However, in a case where any problem occurs during the manned traveling, it is preferable to prohibit or warn about the unmanned traveling in the next and subsequent work as well. Specifically, the location where the problem occurs and the content of the problem is recorded and that content is presented in the next and subsequent work. In this case, the operator may be able to select the manned traveling/unmanned traveling after confirming the presented content.

The control method according to this embodiment further includes disabling the allowable limit line La1 or moving (extending) the allowable limit line La1 toward the outside of the working ground F1 in a case where a specific condition is satisfied. The "specific condition" referred herein is a condition that requires the work vehicle 10 to be moved outside the working ground F1, for example, a condition that the remaining amount of materials (seedling or fuel in this embodiment) consumed by the work (planting work in this embodiment) by the work vehicle 10 falls the determination threshold value or less. In a case where the work vehicle 10 is a harvester such as a combine, the specific condition includes a condition that the storage amount of harvested materials is equal to or greater than the determination threshold value.

Thus, in a case where the specific condition is satisfied, the allowable limit line La1 is temporarily disabled or extended, so that the work vehicle 10 can move beyond the allowable limit line La1 and outside the working ground F1. In addition, the determination threshold value to which the remaining amount of material during reciprocation is compared may be different from the determination threshold value to which the remaining amount of material after end of the reciprocation is compared. Specifically, the determination threshold value after the end of reciprocation is set higher than the determination threshold value during reciprocation. Consequently, even when the amount of materials is not significantly reduced at the end of the reciprocation, the materials can be replenished before starting the next lap traveling.

In addition, the setting of the allowable limit line La1 is not limited to being done by the operation to the terminal device 20 by the operator, but may be done automatically. As an example, the position of the allowable limit line La1 may be set in accordance with whether or not protrusion of the work vehicle 10 outward from the outline of the working ground F1 is allowed. Herein, whether or not the protrusion of the work vehicle 10 outward from the outline of the working ground F1 is permitted is determined on the basis of, for example, the height of the ridge around the working ground F1, the type of the ridge (soil/concrete, or the like), the presence or absence of an obstacle around the working ground F1, the presence or absence of the work machine 12, the working width W1, the raised and lowered state of the work machine 12, and the presence or absence of turning during the traveling of the work vehicle 10.

As an example, in a case where it is confirmed that protrusion to the outside of the working ground F1 is allowed when the working ground F1 is registered (during teaching traveling), the position of the allowable limit line La1 is automatically set so as to reduce the margin value L2. Consequently, it is possible to set an appropriate safety margin band Am1.

When the work vehicle 10 automatically travels on the working ground F1, it is not essential that the target route R1 is generated in advance (before the automatic traveling starts) as described above. That is, the work vehicle 10 can perform automatic traveling while determining a situation in real time on the basis of, for example, position information of a current position of the work vehicle 10 measured by the positioning device 16, information related to the working ground F1, and a detection result of the detection device 15. Even in such a case, it is useful to set the allowable limit line La1.

That is, in this case, the control method according to this embodiment includes setting the allowable limit line La1 that is defined by the margin value L2 which is a distance to the inside of the working ground F1, based on the outline of the working ground F1, and that is a limit position at which protrusion of the work vehicle 10 is allowed, and causing the work vehicle 10 to automatically travel on the basis of the allowable limit line La1. In short, instead of the generation of the route (target route R1) for causing the work vehicle 10 to travel by the generation processing unit 211 of the control system 1 on the basis of the allowable limit line La1, the travel processing unit 132 of the control system 1 causes the work vehicle 10 to automatically travel on the basis of the allowable limit line La1.

Even in this configuration, even when the route (target route R1) is not generated in advance, it is possible to cause the work vehicle 10 to travel on a more appropriate route, as in the above embodiment.

### Overall Process

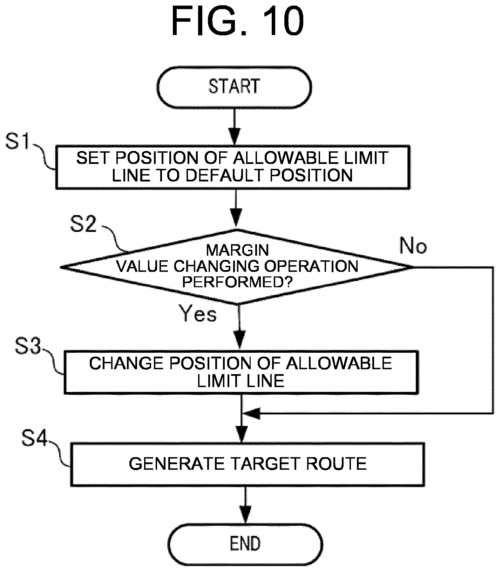

Now, an overall flow of a process related to the generation of the target route R1 in the control method will be described with reference to FIG. 10.

As illustrated in FIG. 10, the setting processing unit 214 of the control system 1 sets a position of the allowable limit line La1 to a default position by setting the margin value L2 to the default (S1). Then, the setting processing unit 214 accepts operation for changing the margin value L2 on the margin setting screen G1 of the terminal device 20 (S2).

When the operation for changing the margin value L2 is performed on the margin setting screen G1 (S2: Yes), the setting processing unit 214 changes the position of the allowable limit line La1 in accordance with the changed margin value L2 (S3).

On the other hand, when the operation for changing the margin value L2 is not performed (S2: No), the control system 1 skips Step S3 and moves the process to Step S4.

In Step S4, the generation processing unit 211 of the control system 1 generates the route (target route R1) for causing the work vehicle 10 to travel on the basis of the allowable limit line La1.

However, the flowchart illustrated in FIG. 10 is merely an example, and processes may be added or omitted as appropriate, and the order of the processes may be changed as appropriate.

### [5] Modifications

Hereinafter, modifications of Embodiment 1 will be listed. The modifications described below can be applied in appropriate combinations.

The control system 1 in this disclosure includes a computer system. The computer system is mainly comprised of one or more processors and one or more memories as hardware. A function of the control system 1 in this disclosure is realized by execution of a program (control program for a work vehicle) recorded in the memory of the computer system by the processor. The program may be recorded in advance in the memory of the computer system, provided over an electric communication line, or recorded on a non-transitory recording medium such as a memory card, an optical disk, and a hard disk drive that can be read by the computer system. In addition, some or all of the functional units included in the control system 1 may be composed of electronic circuits.

Furthermore, it is not essential for the control system 1 that at least a part of the functions of the control system 1 is concentrated in one housing, and the components of the control system 1 may be distributed into a plurality of housings. Conversely, in embodiment 1, functions distributed into a plurality of devices (e.g., the control device 13 and the terminal device 20) may be integrated into a single housing. Furthermore, at least some of the functions of the control system 1 may be realized by cloud (cloud computing) or the like.

In addition, the terminal device 20 is not limited to a general-purpose terminal such as a tablet terminal, a smartphone, and a laptop computer, but may be a dedicated terminal. Furthermore, a plurality of the terminal devices 20 may be associated with the one work vehicle 10. In this case, the one work vehicle 10 can be controlled by the plurality of terminal devices 20. Conversely, the one terminal device 20 may be associated with a plurality of the work vehicles 10. In this case, the plurality of work vehicles 10 can be controlled by the one terminal device 20.

In addition, the above target route R1 is merely an example and can be changed as appropriate. For example, the working direction of the work vehicle 10 (the direction of the work routes r11) and/or the order in which the work routes r11 travels can be changed as appropriate.

In addition, in a case where the work vehicle 10 is a harvester such as a combine harvester, the position of the allowable limit line La1 may be set in accordance with the working width W1 of the work vehicle 10, that is, the reaping width.

### (Embodiment 2)

A control method for a work vehicle 10 according to this embodiment differs from that of the first embodiment in that a setting mode related to setting of the position of an allowable limit line La1 is designated in accordance with a traveling mode of the work vehicle 10. Hereinafter, the same configurations as those in Embodiment 1 will be denoted by the same reference numerals and description thereof will be omitted as appropriate.

That is, in Embodiment 1, the traveling mode of the work vehicle 10 is designated in accordance with the setting mode related to the setting of the position of the allowable limit line La1, whereas in this embodiment, the setting mode of the allowable limit line La1 is designated in accordance with the traveling mode of the work vehicle 10. The setting mode designated herein includes, for example, a range of a selectable margin value L2 (upper and/or lower limits), or a default value of the margin value L2.

As an example, in a case where unmanned traveling is selected as the traveling mode, a lower limit of the margin value L2 that defines the position of the allowable limit line La1 is set to a larger value compared to a case where manned traveling is selected as the traveling mode. In other words, when the manned traveling is selected, the position of the allowable limit line La1 can be set further outside from the working ground F1 compared to a case where the unmanned traveling is selected.

Consequently, it is possible to automatically designate an appropriate width for an appropriate safety margin band Am1 in accordance with the traveling mode. Determination as to whether an operator gets in the work vehicle 10 can be automated, for example, by a human sensor or a camera provided in a driving unit 111, a seating sensor or a switch provided in a seat (driver's seat) of the driving unit 111, or position information on a mobile terminal (such as a smartphone) carried by the operator. Consequently, it is also possible to automate determination of the traveling mode (manned traveling/unmanned traveling).

The configuration of Embodiment 2 can be adopted in appropriate combination with the various configurations (including modifications) described in Embodiment 1.

### (Embodiment 3)

A control method for a work vehicle 10 according to this embodiment differs from that of Embodiment 2 in that a traveling mode of the work vehicle 10 includes monitored traveling that requires an operator to monitor the work vehicle 10 and unmonitored traveling that does not require the operator to monitor the work vehicle 10. Hereinafter, the same configurations as those in Embodiment 2 will be denoted by the same reference numerals and description thereof will be omitted as appropriate.

That is, in Embodiment 2, the setting mode of an allowable limit line La1 is designated depending on whether the traveling mode of the work vehicle 10 is, for example, manned traveling or unmanned traveling, whereas in this embodiment, the setting mode of the allowable limit line La1 is designated depending on whether the traveling mode of the work vehicle 10 is, for example, monitored traveling or unmonitored traveling. The "setting mode" designated herein includes, for example, a range of a selectable margin value L2 (upper and/or lower limits), or a default value of the margin value L2. As a default, the unmonitored traveling is preferably designated.

That is, the monitored traveling is a traveling mode that requires one of the following conditions: an operator gets in the work vehicle 10, the operator does not get in but monitors a state of the work vehicle 10 at a location close to the work vehicle 10 (near the working ground F1), or the operator monitors the state of the work vehicle 10 from a remote location via a terminal device 20. On the other hand, the unmonitored traveling is a traveling mode in which the operator does not need to monitor the work vehicle 10, and is a traveling mode in which none of the above conditions, such as being autonomous, are required.

As an example, in a case where the unmonitored traveling is selected as the traveling mode, a lower limit of the margin value L2, which defines the position of the allowable limit line La1, is set larger compared to a case where the monitored traveling is selected as the traveling mode. In other words, in a case where the monitored traveling is selected, it is possible to set the position of the allowable limit line La1 further outside the working ground F1 compared to a case where the unmonitored traveling is selected.

Furthermore, by replacing the manned traveling with the monitored traveling and replacing the unmanned traveling with the unmonitored traveling, it is possible to adopt a configuration similar to the case where the traveling mode includes the manned traveling/unmanned traveling. That is, as in Embodiment 1, in a case where the traveling mode of the work vehicle 10 is designated in accordance with the setting mode related to the setting of the position of the allowable limit line La1, for example, when the margin value L2 that defines the position of the allowable limit line La1 is greater than a determination threshold value, the unmonitored traveling is designated as the traveling mode. On the other hand, when the margin value L2 that defines the position of the allowable limit line La1 is equal to or less than the determination threshold value, the monitored traveling is designated as the traveling mode. Thus, the monitored traveling/unmonitored traveling is automatically designated in accordance with the setting mode related to the setting of the position of the allowable limit line La1, so that an appropriate traveling mode can be automatically designated in accordance with the width of a set safety margin band Am1.

The configuration of Embodiment 3 (including modifications) can be adopted in appropriate combination with the various configurations described in Embodiment 1 and Embodiment 2 (including modifications).

### (Embodiment 4)

A control method for a work vehicle 10 according to this embodiment differs from that of Embodiment 1 in that an allowable limit line La1 is set in consideration of the height of a work machine 12. Hereinafter, the same configurations as those in Embodiment 1 will be denoted by the same reference numerals and description thereof will be omitted as appropriate.

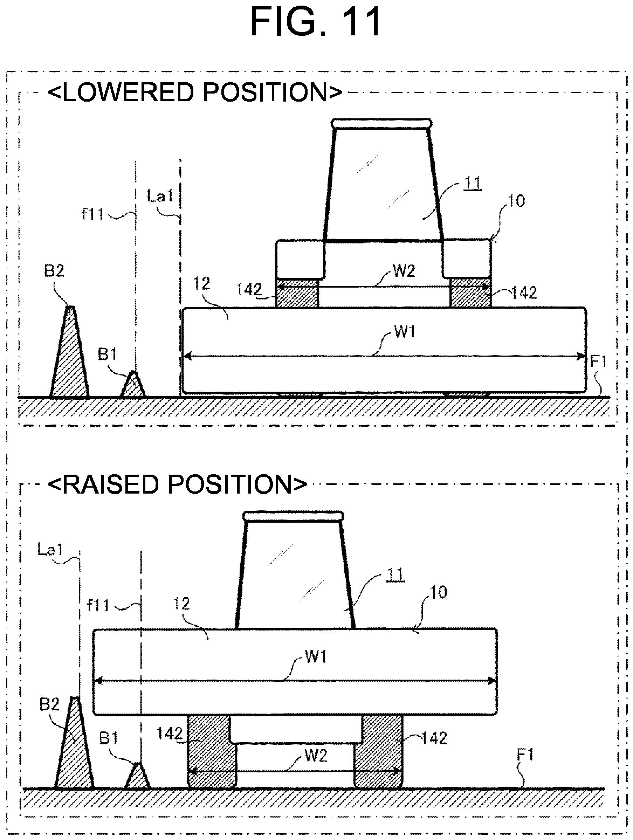

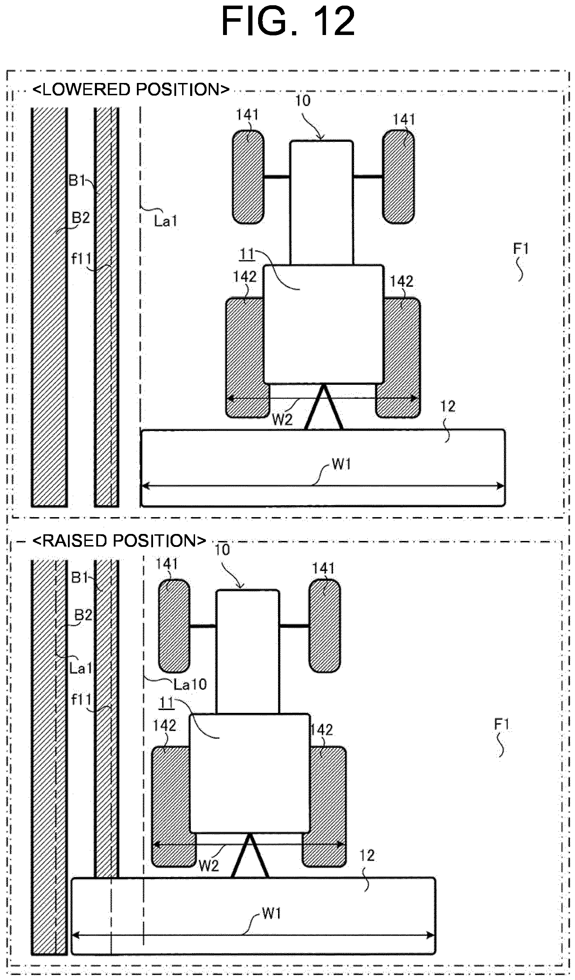

In this embodiment, as illustrated in FIG. 11 and FIG. 12, the work vehicle 10 in which the work machine 12 can be raised and lowered with respect to a body 11 is assumed. As an example, the work vehicle 10 is a towing type work vehicle in which the work machine 12 is coupled to the rear of the vehicle body (body 11) composed of a tractor, and the work machine 12 is towed by the body 11.

In this work vehicle 10, the working width W1, which is the width dimension in the left-right direction D3 of the work machine 12, is larger than the vehicle width W2, which is the width dimension in the left-right direction D3 of the body 11, which is the vehicle body (W1 > W2). The vehicle width W2 is defined by a distance between outer surfaces of a pair of rear wheels 142 that are the outermost in the left-right direction D3 of the body 11.

In a working state in which work is being performed, this type of work vehicle 10 lowers the work machine 12 to a "lowered position" illustrated on the upper side of each of FIG. 11 and FIG. 12, and travels on a working ground F1. On the other hand, in a non-working state in which no work is being performed, the work machine 12 is raised to a "raised position" illustrated on the lower side of each of FIG. 11 and FIG. 12, and travels on the working ground F1. As a result, the height (minimum ground clearance) of the work machine 12 from a traveling surface (surface of the working ground F1) changes between the working state and the non-working state.

According to the control method for the work vehicle 10 according to this embodiment, the setting of the allowable limit line La1 is automatically performed at least on the basis of the height of the work machine 12. Specifically, even in a case where there is an obstacle such as a ridge around the working ground F1, when the height of the obstacle is lower than the height (minimum ground clearance) of the work machine 12, protrusion of the work machine 12 is allowed up to a space above the obstacle.

As an example, as illustrated in FIG. 11 and FIG. 12, it is assumed that a ridge B1 exists on a first outline f 11, which is an outline (outer peripheral edge) of the working ground F1, and a ridge B2 exists further outside the ridge B1 (on the side opposite to the working ground F1). Herein, the ridge B1 is lower than the height of the work machine 12 in the non-working state (raised position) and higher than the height of the work machine 12 in the working state (lowered position). The ridge B2 is higher than the ridge B1 and higher than the height of the work machine 12 in the non-working state (raised position).

In this case, when the allowable limit line La1 is set based on the working state (lowered position), the protrusion of the work machine 12 from the ridge B1 (first outline f11) is not allowed, and therefore the allowable limit line La1 is set inside the outline of the working ground F1 (first to fourth outlines f11 to f14). That is, the margin value L2, which is the distance from the outline of the working ground F1 (the first to fourth outlines f11 to f14) to the inside of the working ground F1, is a positive(+) value.

On the other hand, when the allowable limit line La1 is set based on the non-working state (raised position), the protrusion of the work machine 12 from the ridge B1 (first outline f11) is allowed, and therefore the allowable limit line La1 is set at a position outside the outline of the working ground F1 (first to fourth outlines f11 to f14). In short, the allowable limit line La1 can be set on the basis of the position of the ridge B2 outside the ridge B1 (first outline f11). That is, the margin value L2, which is the distance from the outline of the working ground F1 (the first to fourth outlines f11 to f14) to the inside of the working ground F1, is a negative (-) value.

As described above, the allowable limit line La1 is set in consideration of the height of the work machine 12, so that the area in which the work vehicle 10 can travel can be secured as wide as possible, and for example, it is possible to work up to an edge of the outline (first to fourth outlines f11 to f14) of the working ground F1.

Herein, the height of an obstacle such as the ridges B1 and B2 that exist around the working ground F1 can be detected by, for example, environmental recognition sensors such as various sensors included in the detection device 15. In addition, the height of the work machine 12 can be specified from pre-registered information according to the type of the work machine 12 mounted on the body 11.

In addition, what is set in consideration of the height of the work machine 12 is not limited to the position of the allowable limit line La1 (margin value L2) itself, but may be, for example, the range of the selectable margin value L2 (upper limit value and/or lower limit value), the default value of the margin value L2, or the like.

To be able to set the margin value L2 to a negative value (that is, to allow the protrusion of the work machine 12 outside the working ground F1) is equivalent to change of an object, protrusion with respect to the allowable limit line La1 of which is regulated, from the work machine 12 to the body 11. That is, as illustrated at the lower side of FIG. 12, even when the margin value L2 is set to a negative value, the body 11 (vehicle body) does not protrude outward from the working ground F1. Therefore, to regulate the protrusion of the body 11 from the allowable limit line La10 set inside the working ground F1 is equivalent to setting the margin value L2 to a negative value.

In addition, for the work vehicle 10 in which the work machine 12 cannot be lowered and raised with respect to the body 11, as described above, it is possible to set the allowable limit line La1 in consideration of the height of the work machine 12. As an example, in the case of the work machine 12 such as a boom sprayer used for spraying pesticides, the work machine 12 does not rise and lower with respect to the body 11, but like the "raised position" described above, the work machine 12 is fixed at the height that is separated from a traveling surface (a surface of the working ground F1). Therefore, even in a case where there is an obstacle such as a ridge around the working ground F1, when the height of an obstacle is lower than the height (minimum ground clearance) of the work machine 12, protrusion of the work machine 12 is allowed up to a space above the obstacle. Therefore, the allowable limit line La1 is set in accordance with the height (minimum ground clearance) of the work machine 12, so that the protrusion of the work machine 12 from the ridge (outline of the working ground F1) is allowed.

The configuration of Embodiment 4 (including modifications) can be adopted in appropriate combination with the various configurations (including modifications) described in Embodiment 1 to Embodiment 3.

### (Embodiment 5)

A control method for a work vehicle 10 according to this embodiment differs from that of Embodiment 1 in that an allowable limit line La1 in first work is set on the basis of information related to second work to be performed on a working ground F1 after the first work to be performed on the working ground F1. Hereinafter, the same configurations as those in Embodiment 1 will be denoted by the same reference numerals and description thereof will be omitted as appropriate.

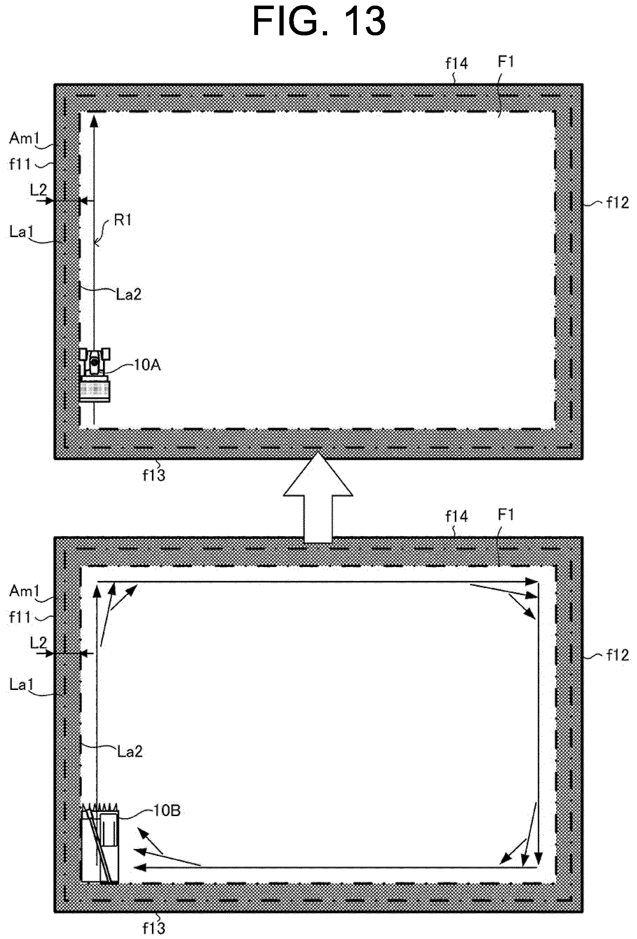

In this embodiment, as illustrated in FIG. 13, planting (rice planting) work performed by a work vehicle 10A composed of a rice transplanter is the "first work", and reaping and harvesting work performed by a work vehicle 10B composed of a combine is the "second work".

Herein, a safety margin band Am1 to be secured inside an outline (first to fourth outlines f11 to f14) of the working ground F1 during the second work performed when work vehicle 10B travels is set to be larger (wider) compared to a case of the first work performed when the work vehicle 10A travels. That is, as illustrated in the lower side of FIG. 13, when the work vehicle 10B travels, an allowable limit line La2 is set inside the working ground F1 with respect to an allowable limit line La1 that is originally set when the work vehicle 10A travels.

In this case, in the control method according to this embodiment, as illustrated in the upper side of FIG. 13, even when the work vehicle 10A which performs the first work travels, for example, the allowable limit line La2 is set on the basis of information related to the second work such as a model and/or dimensions of the work vehicle 10B. Consequently, the first work (planting work) by the work vehicle 10A is performed only in a slightly narrower range than a range defined by the allowable limit line La1.

In this case, even when the traveling range of the work vehicle 10B is limited to the inside of the allowable limit line La2 when the work vehicle 10B performs the second work (reaping/harvesting work), the second work in the entire range where the work vehicle 10A performed the first work (planting work) can be performed. Therefore, in the second work, even when the work vehicle 10B which travels along the outline (first to fourth outlines f11 to f14) travels around an outermost periphery, automatic traveling can be performed instead of manual traveling, and it is possible to greatly reduce a burden on an operator.

In addition, the information related to the second work (subsequent work) is not limited to the position of the allowable limit line La1 (margin value L2) itself at the time of the first work, but may be, for example, the range of the selectable margin values L2 (upper limit and/or lower limit), the default value of the margin value L2, or the like.

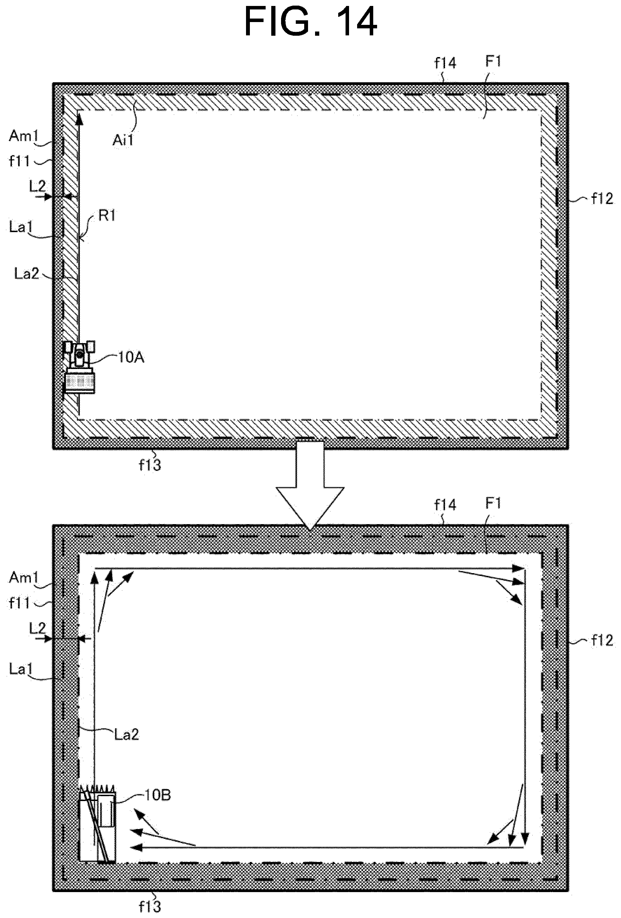

Also, as illustrated in the upper side of FIG. 14, in the first work, for example, it is possible to adjust the margin value L2 and set the allowable limit line La1 outside the allowable limit line La2 in the second work. In this case, the first work (planting work) by the work vehicle 10A is also performed for a difference area Ai1 between the allowable limit line La2 and the allowable limit line La1. For the difference area Ai1, when the second work (reaping and harvesting work) is performed, the reaping and harvesting work cannot be performed by simply causing the work vehicle 10B to automatically travel.

Therefore, in the case of FIG. 14, in a case where the allowable limit line La1 in the first work is set to outside with respect to the allowable limit line La2 in the second work, it is preferable to notify an operator that the difference area Ai1 cannot be harvested in the automatic traveling by displaying, outputting voice, transmission to an external terminal, or the like. Furthermore, in this case, it is preferable to encourage the operator to perform the second work while manually traveling (manually driving) or by hand.

In this embodiment, it is possible to set the margin value L2 to a negative value.

The configuration of Embodiment 5 (including modifications) can be adopted in appropriate combination with the various configurations (including modifications) described in Embodiment 1 to Embodiment 4.

### [Appendixes of Invention]

Hereinafter, summary of the invention extracted from the above embodiments will be added. In addition, each configuration and each processing function described in the following appendixes can be selected and combined arbitrarily.

### <Appendix 1>

A control method for a work vehicle capable of performing work while traveling on a working ground, the control method for a work vehicle including:
setting a position of an allowable limit line that is defined by a margin value which is a distance to inside of the working ground, based on an outline of the working ground, and that is a limit position at which protrusion of the work vehicle is allowed; and
generating a route for causing the work vehicle to travel on the basis of the allowable limit line.

### <Appendix 2>

The control method for a work vehicle described in Appendix 1, further including

designating a setting mode related to setting of the position of the allowable limit line in accordance with a traveling mode of the work vehicle.

### <Appendix 3>

The control method for a work vehicle described in Appendix 1, further including
designating a traveling mode of the work vehicle in accordance with a setting mode related to setting of the position of the allowable limit line.

### <Appendix 4>

The control method for a work vehicle described in Appendix 2 or 3, wherein
the traveling mode includes any of manned traveling which requires an operator to get in the work vehicle, and unmanned traveling which does not require an operator to get in the work vehicle.

### <Appendix 5>

The control method for a work vehicle described in any of Appendixes 2 to 4, wherein
the traveling mode includes a turning mode.

### <Appendix 6>

The control method for a work vehicle described in any of Appendixes 2 to 5, wherein
a relative relationship between the traveling mode and the setting mode is applied to a same single work.

### <Appendix 7>

The control method for a work vehicle described in any of Appendixes 1 to 6, wherein
the position of the allowable limit line is set in accordance with whether or not protrusion of the work vehicle outward from the outline of the working ground is allowed.

### <Appendix 8>

The control method for a work vehicle described in any of Appendixes 1 to 7, wherein
the working ground includes a plurality of outlines, and the position of the allowable limit line is able to be set collectively for the plurality of outlines.

### <Appendix 9>

The control method for a work vehicle described any of Appendixes 1 to 8, wherein
the working ground includes a plurality of outlines, and the position of the allowable limit line is able to be set individually for each of the plurality of outlines.

### <Appendix 10>

The control method for a work vehicle described in any of Appendixes 1 to 9, wherein
the working ground includes a plurality of outlines, and in a case where the plurality of outlines are divided into a plurality of groups depending on a working direction, the position of the allowable limit line is able to be set individually for each of the plurality of groups.

### <Appendix 11>

The control method for a work vehicle described in any of Appendixes 1 to 10, wherein
the margin value includes a negative value.

### <Appendix 12>

The control method for a work vehicle described in any one of Appendixes 1 to 11, wherein
the allowable limit line determines a position of an inside area where the work vehicle reciprocates along a working direction.

### <Appendix 13>

The control method for a work vehicle described in any of Appendixes 1 to 12, further including
disabling the allowable limit line or moving the allowable limit line toward outside of the working ground in a case where a specific condition is satisfied.

### <Appendix 14>

The control method for a work vehicle according to any of Appendixes 1 to 13, wherein
the position of the allowable limit line in first work is set on the basis of information related to second work to be performed on the working ground after the first work to be performed on the working ground by the work vehicle.

### <Appendix 15>

A control method for a work vehicle capable of performing work while traveling on a working ground, the control method for a work vehicle including:
setting an allowable limit line that is defined by a margin value which is a distance to inside of the working ground, based on an outline of the working ground, and that is a limit position at which protrusion of the work vehicle is allowed; and
causing the work vehicle to automatically travel on the basis of the allowable limit line.

### <Appendix 16>

A control program for a work vehicle, the control program for causing one or more processors to execute
the control method for a work vehicle described in any of Appendixes 1 to 15.

### REFERENCE SIGNS LIST

1 control system for a work vehicle
10, 10A, 10B work vehicle
11 body
100 work system
211 generation processing unit
214 setting processing unit
F1 working ground
F11 inside area
f11 to f14 first to fourth outlines (outline)
L2 margin value
La1, La2, La10 allowable limit line
R1 target route (route)

## Claims

1. A control method for a work vehicle capable of performing work while traveling on a working ground, the control method for a work vehicle comprising:
setting a position of an allowable limit line that is defined by a margin value which is a distance to inside of the working ground, based on an outline of the working ground, and that is a limit position at which protrusion of the work vehicle is allowed; and
generating a route for causing the work vehicle to travel on the basis of the allowable limit line.

2. The control method for a work vehicle according to claim 1, further comprising
designating a setting mode related to setting of the position of the allowable limit line in accordance with a traveling mode of the work vehicle.

3. The control method for a work vehicle according to claim 1, further comprising
designating a traveling mode of the work vehicle in accordance with a setting mode related to setting of the position of the allowable limit line.

4. The control method for a work vehicle according to claim 2 or 3, wherein
the traveling mode includes any of manned traveling which requires an operator to get in the work vehicle, and unmanned traveling which does not require an operator to get in the work vehicle.

5. The control method for a work vehicle according to claim 2 or 3, wherein
the traveling mode includes a turning mode.

6. The control method for a work vehicle according to claim 2 or 3, wherein
a relative relationship between the traveling mode and the setting mode is applied to a same single work.

7. The control method for a work vehicle according to any one of claims 1 to 3, wherein
the position of the allowable limit line is set in accordance with whether or not protrusion of the work vehicle outward from the outline of the working ground is allowed.

8. The control method for a work vehicle according to any one of claims 1 to 3, wherein
the working ground includes a plurality of outlines, and the position of the allowable limit line is able to be set collectively for the plurality of outlines.

9. The control method for a work vehicle according to any one of claims 1 to 3, wherein
the working ground includes a plurality of outlines, and the position of the allowable limit line is able to be set individually for each of the plurality of outlines.

10. The control method for a work vehicle according to any one of claims 1 to 3, wherein
the working ground includes a plurality of outlines, and in a case where the plurality of outlines are divided into a plurality of groups depending on a working direction, the position of the allowable limit line is able to be set individually for each of the plurality of groups.

11. The control method for a work vehicle according to any one of claims 1 to 3, wherein
the margin value includes a negative value.

12. The control method for a work vehicle according to any one of claims 1 to 3, wherein
the allowable limit line determines a position of an inside area where the work vehicle reciprocates along a working direction.

13. The control method for a work vehicle according to any one of claims 1 to 3, further comprising
disabling the allowable limit line or moving the allowable limit line toward outside of the working ground in a case where a specific condition is satisfied.

14. The control method for a work vehicle according to any one of claims 1 to 3, wherein
the position of the allowable limit line in first work is set on the basis of information related to second work to be performed on the working ground after the first work to be performed on the working ground by the work vehicle.

15. A control method for a work vehicle capable of performing work while traveling on a working ground, the control method for a work vehicle comprising:
setting an allowable limit line that is defined by a margin value which is a distance to inside of the working ground, based on an outline of the working ground, and that is a limit position at which protrusion of the work vehicle is allowed; and
causing the work vehicle to automatically travel on the basis of the allowable limit line.

16. A control program for a work vehicle, the control program for causing one or more processors to execute
the control method for a work vehicle according to any one of claims 1 to 3.

17. A control system for a work vehicle, used for a work vehicle capable of performing work while traveling on a working ground, the control system for a work vehicle comprising:
a setting processing unit that sets a position of an allowable limit line that is defined by a margin value which is a distance to inside of the working ground, based on an outline of the working ground, and that is a limit position at which protrusion of the work vehicle is allowed; and
a generation processing unit that generates a route for causing the work vehicle to travel on the basis of the allowable limit line.

18. A work system comprising:
the control system for a work vehicle according to claim 17; and
a body of the work vehicle.
